# FASCICULE DE BREVET EUROPEEN

(11) **EP 3 760 665 B1**
(45) Date de publication et mention de la délivrance du brevet: **22.05.2024**
(21) Numéro de dépôt: 20184092.3
(22) Date de dépôt: 03.07.2020
(51) Int. Cl.: C08G 75/00, C08G 18/00, C08G 75/02, C08G 75/12, C08L 81/02, C08G 65/00

(54) **PRÉPOLYMÈRES POLYTHIOÉTHERS ET LEURS UTILISATIONS DANS DES COMPOSITIONS DURCISSABLES EN PARTICULIER DANS DES MASTICS**
POLYTHIOETHER-PREPOLYMER UND IHRE VERWENDUNG BEI DER HÄRTUNG VON ZUSAMMENSETZUNGEN, INSBESONDERE IN DICHTUNGEN
POLYTHIOETHER PREPOLYMERS AND THEIR USES IN CURING COMPOSITIONS, IN PARTICULAR IN SEALANTS

(30) Priorité: 05.07.2019 FR 1907545
(43) Date de publication de la demande: 06.01.2021
(73) Titulaire: Socomore, 56000 Vannes (FR)
(72) Inventeur: GENTY, Sébastien, 69007 LYON (FR); FAUQUET, Germain, 69007 LYON (FR); TINGAUT, Philippe, 69007 LYON (FR)
(74) Mandataire: Oak & Fox

(56) Documents cités:
- EP-A1- 3 176 232
- EP-A1- 3 208 291
- EP-A1- 3 444 317
- WO-A1-2012/042059
- WO-A1-2017/044704
- WO-A1-2017/140489
- WO-A1-2018/085650
- WO-A1-2018/229583
- WO-A1-2019/053646
- WO-A1-2019/060559
- WO-A1-2019/064103
- WO-A1-2019/099347

## Description

La présente invention se rapporte au domaine des enduits d'étanchéité encore appelés mastics, à base de polythioéthers, et leurs utilisations en particulier dans le domaine de l'aéronautique.

Ces mastics sont des produits formés *in situ* au moyen d'une composition durcissable comprenant un prépolymère et un agent réticulant/durcissant.

Des mastics, à base de polythioéthers sont déjà connus de l'art antérieur notamment dans US6172179 B1 ou plus récemment dans les demandes de brevet WO 2018/085650 et WO 2019/010457. Ces polythioéthers sont notamment préparés à partir de prépolymères obtenus en faisant réagir un thiol avec un composé comprenant une double liaison tel qu'un diène. Puis, au moment de l'application, ledit prépolymère est mis en présence d'un agent durcissant notamment choisi parmi les résines époxy. Ces prépolymères ne comprennent pas de groupes hydroxyles pendants et ne présentent donc pas les avantages liés à cette propriété.

En outre, les demandes de brevet EP 3444317A1, WO2017/140489A1 et EP3208291A1 décrivent l'obtention de nanocristaux composites c'est-à-dire de nanocristaux dans une matrice polymère, elles ne décrivent pas un prépolymère obtenu par la réaction d'un composé comprenant des groupes thiols et d'un composé comprenant des groupes époxy tels que le rapport molaire du ou des composé(s) thiol : le ou les composé(s) époxy est compris entre 3 :1 et 4 :1.

WO2019/060559A1 décrit une composition adhésive comprenant un premier composant de type « époxy » notamment un « epoxy adduct » et un second composant, qui réagit avec le premier, comprenant un polythiol et une alkanolamine, cette demande de brevet ne décrit pas un prépolymère tel que défini selon la présente invention.

WO2018/229583A1 décrit des compositions durcissables époxy/thiol ;WO2019064103A1 et WO2017/044704A1 décrivent des compositions obtenues à partir d'un polythiol et d'un composé comprenant une insaturation ; WO2019053646A1 décrit l'obtention de film adhésifs à partir d'une matrice (méthacrylate) réticulée et d'une composition époxy /thiol ;WO2019099347A1 décrit la préparation de résines siloxanes durcissables destinées à être utilisées en fabrication additive ; EP3176232A1 décrit une composition formant une couche isolante qui contient un liant à base d'un mélange d'une résine époxy et d'un composé insaturé avec des composés thiols comme agent de durcissement, et leur utilisation pour la protection contre l'incendie. Ces demandes ne divulguent pas un prépolymère obtenu par la réaction d'un composé comprenant des groupes thiols et d'un composé comprenant des groupes époxy tels que le rapport molaire du ou des composé(s) thiol : le ou les composé(s) époxy est compris entre 3 :1 et 4 :1.

WO2018085650A1 décrit la préparation de thioéthers poly(alcénylés) qui peuvent être incorporés dans le squelette de prépolymères polythioéthers et qui peuvent être utilisés comme agents durcissant notamment comme mastics en aéronautique ; WO2012/042059A1 décrit la préparation de polymères thiol-ènes. Ces demandes de brevet ne décrivent pas l'obtention de prépolymères comprenant des groupes OH secondaires. Par ailleurs, il est connu de l'homme du métier que les polymères linéaires ont tendance à gonfler c'est-à-dire à prendre en masse ou en volume après une exposition prolongée aux hydrocarbures et autres lubrifiants. Une des solutions proposées pour surmonter cet inconvénient est d'utiliser des agents polyfonctionnels, comme les composés ayant plus de deux groupes thiols réactifs, aptes à produire des polythioéthers ayant une fonctionnalité supérieure à 2.

En conséquence il demeure toujours un besoin de nouveaux prépolymères présentant des propriétés particulières ainsi que des compositions obtenues à partir d'un prépolymère et d'un durcisseur telles qu'au moins l'un des deux présentent une fonctionnalité moyenne supérieure ou égale à 2, ou telles que la somme des fonctionnalités du prépolymère et de l'agent réticulant, encore appelé durcisseur, soit supérieure à 4.

En outre il demeure également toujours un besoin de nouvelles compositions de mastics présentant des propriétés chimiques spécifiques, adaptées au besoin de l'aéronautique.

Plus particulièrement, les inventeurs de la présente invention ont cherché à développer un prépolymère polythioéther présentant une fonctionnalité thiol supérieure à 2 afin de s'assurer que le polymère final soit sous la forme d'un réseau tridimensionnel.

### Enoncé de l'invention

Un premier objet de la présente invention vise un prépolymère polythioéther comprenant des groupes fonctionnels thiols (-SH), et susceptible d'être obtenu par la réaction : d'au moins un composé T présentant un nombre f de fonctionnalités thiol choisi dans le groupe constitué par les fonctionnalités 2 ,3, 4 et 6, de préférence 3, 4 et 6, avec au moins un composé E présentant un nombre g de fonctionnalités époxyde choisi dans le groupe constitué par les fonctionnalités 2 et 3 et en ce que lors de la réaction d'au moins un composé T et au moins un composé E, les composés T comprenant des groupes thiols et les composés E comprenant des groupes époxy réagissent ensemble selon un rapport nombre de groupes thiols : nombre de groupes époxy allant de 3 :1 à 4 :1.

Le prépolymère polythioéther comprend par conséquent également des groupes fonctionnels hydroxyles (-OH) pendants.

Le prépolymère polythioéther selon l'invention présente une fonctionnalité thiol moyenne supérieure ou égale à 2, de préférence supérieure ou égale à 3 ainsi ce prépolymère est apte à produire des polymères se développant selon trois dimensions.

Selon un premier aspect, le prépolymère polythioéther selon l'invention présente une fonctionnalité thiol moyenne allant de 3 à 6 et de manière préférée égale à 3, cette variante préférée permet de préparer des compositions qui vont réticuler pour donner un réseau tridimensionnel, selon une vitesse de réticulation contrôlable en fonction de la quantité de catalyseur.

Selon un deuxième aspect, le prépolymère polythioéther selon la présente invention, éventuellement selon le premier aspect, présente un poids moléculaire allant 1000 g/mol à 6000 g/mol, de préférence de 3000 g/mol à 6000 g/mol. La répartition du poids moléculaire du prépolymère polythioéther est déterminée par chromatographie d'exclusion stérique (CES) avantageusement sur une colonne séparant les fortes masses molaires (1000- 2000000 g/mol), dont le solvant est le tétrahydrofurane (THF).

Selon un troisième aspect, le prépolymère polythioéther selon la présente invention, éventuellement selon au moins l'un quelconque des premier et deuxième aspects, présente une température de transition vitreuse Tg allant de - 60 °C à - 30°C, de préférence allant de -40°C à -35°C. La température de transition vitreuse est considérée comme le début (« onset » en anglais) de la transition de phase déterminée grâce à un calorimètre à balayage différentiel (DSC). L'analyse consiste en un balayage de -70 °C à + 0 °C à une vitesse de 10°C/min sous un flux constant d'azote conformément à la norme ISO 11357-3:2018.

Selon un quatrième aspect, le prépolymère polythioéther selon la présente invention, éventuellement selon au moins l'un quelconque des premier, deuxième et troisième aspects, présente une viscosité de 100 à 500 Pa.s, de préférence 350 Pa.s. La mesure est réalisée sur un rhéomètre de géométrie cone/plan en régime oscillatoire de 0,5 s⁻¹, telle que défini dans la norme ISO 11443:2014. Ces prépolymères sont donc liquides à température ambiante (20°C) et pression atmosphérique.

Un deuxième objet de la présente invention vise un procédé de préparation du prépolymère polythioéther selon la présente invention comprenant au moins les étapes suivantes :
- disposer d'au moins un composé T présentant un nombre f de fonctionnalités thiol (-SH) choisi dans le groupe constitué par les fonctionnalités 2 ,3, 4 et 6 ;
- ajouter audit composé T au moins un composé E présentant un nombre g de fonctionnalités époxyde choisi dans le groupe constitué par les fonctionnalités 2 et 3, en une quantité telle que le rapport nombre de groupes thiols : nombre de groupes époxydes des va de 3 :1 à 4 :1 ;
- ajouter un catalyseur avant et/ou après l'ajout dudit composé E,
- agiter le mélange réactionnel comprenant le composé E, le composé T et le catalyseur,
- récupérer le prépolymère polythioéther.

Un troisième objet de la présente invention vise une composition durcissable ainsi que son utilisation en tant qu'enduit d'étanchéité ou mastic.

Les compositions de mastics selon l'invention présentent en outre des propriétés chimiques spécifiques en particulier des propriétés de résistance aux solvants tels que les hydrocarbures, l'eau notamment salée et les fluides hydrauliques, plus particulièrement il a été observé que les propriétés mécaniques desdites compositions selon l'invention sont conservées lorsqu'elles sont placées en présence de ces solvants : on n'observe pas de gonflement. De plus les compositions selon l'invention présentent une bonne adhérence à leur support même lors de l'application ultérieure d'un solvant sur ledit support.

En particulier, la composition selon la présente invention lorsqu'elle est durcie, présente de préférence une dureté allant de 20 à 100 Shore A, de préférence de 40 à 70 Shore A, déterminée par pénétration au moyen d'un duromètre selon la norme ISO 868 : 2003 du 01/03/2003.

D'autres aspects, avantages, propriétés de la présente invention sont présentés dans la description et les exemples qui suivent.

### Définitions

Par « prépolymère » au sens de l'invention on entend un oligomère ou un polymère présentant des groupes réactifs qui lui permettent de participer à une polymérisation ultérieure et d'incorporer ainsi plusieurs unités monomères dans au moins une chaîne de la macromolécule finale.

Par « polythioéther » au sens de l'invention on entend un composé comprenant au moins deux groupements thioéthers, c'est-à-dire des groupements « -C-S-C- ».

Par « durcisseur » au sens de l'invention on entend un composé apte à réagir avec le prépolymère. Le composé durcisseur est également appelé « agent réticulant ».

Par « composition durcissable » au sens de l'invention on entend une composition comprenant un prépolymère et un durcisseur qui réagissent spontanément pour donner une composition durcie comprenant un polymère réticulé. Généralement le polymère final ne comprend substantiellement plus de fonctions réactives.

### Prépolymère polythioéther

Le prépolymère polythioéther selon la présente invention comprend des groupes fonctionnels thiols, c'est-à-dire -SH, terminaux, liés à un atome de carbone C, ces groupes fonctionnels thiols sont aptes à réagir avec les fonctions réactives de l'oligomère utilisé à titre d'agent réticulant lors de la mise en oeuvre de la composition durcissable selon l'invention. Les groupes fonctionnels thiols sont des groupes terminaux c'est-à-dire que ledit prépolymère polythioéther selon la présente invention ne comprend pas de groupes thiols pendants dans le squelette.

Le prépolymère selon la présente invention n'est pas réticulé. En effet le prépolymère doit être apte à réagir, *via* ses groupes thiols terminaux, avec les fonctions réactives de l'oligomère utilisé à titre d'agent réticulant pour donner la composition durcie finale. En particulier le taux de réticulation du polymère présent dans la composition finale selon l'invention la rend apte à être utilisée en tant qu'enduit d'étanchéité ou mastic.

Comme déjà mentionné, le prépolymère polythioéther selon la présente invention est susceptible d'être obtenu par la réaction :
d'au moins un composé T, qui est un polythiol, présentant un nombre f de fonctionnalités thiol choisi dans le groupe constitué par les fonctionnalités 2 ,3, 4 et 6, de préférence 3, 4 et 6, avec au moins un composé E, qui est un époxyde, présentant un nombre g de fonctionnalités époxyde choisi dans le groupe constitué par les fonctionnalités 2 et 3.

Par « fonctionnalité d'un composé », on entend le nombre de groupes fonctionnels ou de fonctions, c'est-à-dire de groupes réactifs, présents dans ce composé -encore appelé monomère-, ces fonctions réactives étant capables de participer à une réaction chimique conduisant à la croissance de la chaîne - c'est-à-dire du polymère-.

Dans la présente invention, les fonctions réactives du composé T sont les fonctions thiols et les fonctions réactives du composé E sont les fonctions époxyde.

Par fonction « époxyde », on entend un groupe comportant un oxygène ponté sur une liaison carbone-carbone. Dans le présent texte les termes « époxy » et « époxydes » sont utilisés de manière indifférente.

Comme déjà mentionné, les composés T et E, ainsi que leurs quantités respectives, sont choisis de manière à conduire à un prépolymère de fonctionnalité thiol moyenne supérieure ou égale à 2, de préférence supérieure ou égale à 3.

En particulier, la réaction de préparation du prépolymère polythioéther est effectuée avec au moins un composé T comprenant des groupes thiols et au moins un composé E comprenant des groupes époxydes selon un rapport nombre de groupes thiols : nombre de groupes époxydes des allant de 3 :1 à 4 :1

Par « nombre de groupes thiols » et « nombre de groupes époxydes », on entend le nombre de groupes qui participent à la réaction.

En outre, avantageusement les composés T et E ne comprennent pas de double liaisons carbone-carbone réactives, c'est-à-dire de fonctions alcényles réactives, ni de triple liaisons carbone-carbone réactives, c'est-à-dire de fonctions alcynyles réactives.

Selon un premier mode particulier, préféré, de l'invention le prépolymère polythioéther est obtenu par la réaction d'au moins un composé T présentant un nombre f de fonctionnalités thiol choisi dans le groupe constitué par les fonctionnalités 3, 4 et 6 avec au moins un composé E présentant un nombre g de fonctionnalités époxyde choisi dans le groupe constitué par les fonctionnalités 2 et 3.

Selon un deuxième mode particulier de l'invention le prépolymère polythioéther est obtenu par la réaction d'au moins un composé T présentant un nombre f de fonctionnalités thiol égal à 2 avec au moins un composé E présentant un nombre g de fonctionnalités égal à 3.

En outre, ledit prépolymère polythioéther selon l'invention comprend également des groupes fonctionnels hydroxyles (-OH) pendants. Ces groupes sont obtenus suite à l'ouverture des cycles époxydes lors de la réaction desdits cycles époxydes des composés E avec les groupes thiols des composés T. Plus particulièrement, le prépolymère polythioéther comprend des groupes thioéthers, -S-CH₂-CH(OH)- avec S lié à un atome de carbone.

Dans le présent texte les termes « hydroxy » et « hydroxyles » sont utilisés de manière indifférente.

Sans vouloir être lié à une quelconque théorie, il semble que les différents groupes présents dans le prépolymère polythioéther selon l'invention permettent l'obtention de propriétés avantageuses en particulier en termes de résistance chimique principalement aux hydrocarbures, à l'eau notamment salée et aux fluides hydrauliques dues notamment à la présence de motifs thioéthers à groupes hydroxyles pendants -S-CH₂-CH(OH)- et en termes d'adhérence dues notamment à la présence de groupes hydroxyles pendants. En outre, ledit prépolymère polythioéther peut être formulé de manière à présenter une structure présentant une fonctionnalité égale à 3 particulièrement apte à conduire à une composition durcissable dont la vitesse de réticulation est contrôlable.

Comme déjà mentionné le mélange réactionnel comprend les composés qui prennent part à la réaction, en particulier le ou les composé(s) E, le ou les composé(s) T et le catalyseur.

Avantageusement le mélange réactionnel ne comprend pas d'autres composés comprenant des fonctions réactives, différents des composés E et des composés T.

Avantageusement le mélange réactionnel ne comprend pas de composés choisis parmi les composés comprenant une ou plusieurs double-liaisons réactives encore appelés groupes alcényles et les composés comprenant une ou plusieurs triple-liaisons réactives encore appelés groupes alcnyles.

Avantageusement le mélange réactionnel est constitué du composé E, du composé T et du catalyseur.

Avantageusement, le prépolymère polythioéther selon l'invention est obtenu à partir d'au moins un composé T comprenant au moins deux groupes choisis parmi les groupes suivants :
b) -(CH₂)_{nb}-SH ;
c) -(CH₂)_{nc}-O-(CH₂)_{mc}-SH ;
d) -(CH₂)_{nd}-O-(CO)-(CH₂)_{md}-SH ;
e) -(CH₂)ₙₑ-(CO)-O-(CH₂)ₘₑ-SH ;
f) -(CH₂)_{nf}-O-(CH₂CH₂O)_{lf}-(CH₂)_{mf}-SH _{;}
g) -(CH₂)_{ng}-(CO)-O-(CH₂CH₂O)_{lg}-(CH₂)_{mg}-SH ;
h) -(CH₂)ₙₕ-O-(CO)-(CH₂CH₂O)ₗₕ-(CH₂)ₘₕ-SH ;
i) -(CH₂)ₙᵢ-O-(CH₂CH₂O)ₗᵢ-(CO)-(CH₂)ₘᵢ-SH ;
j) -(CH₂)ₙⱼ-O-(CO)-(CH₂CH₂O)ₗⱼ-(CO)-(CH₂)ₘⱼ-SH et
k) -(CH₂)ₙₖ-(CO)-O-(CH₂CH₂O)ₗₖ-(CO)-(CH₂)ₘₖ-SH ;
chacun des nb, nc, nd, ne, nf, ng, nh, ni, nj, nk étant un entier allant de 0 à 10 ; chacun des mc, md, me, mf, mg, mh, mi, mj, mk étant un entier allant de 0 à 10 ; et chacun des lf, lg, lh, li, lj, lk un entier allant de 0 à 6 .

Par «entier allant de 0 à 10», au sens de la présente demande, on entend que ledit entier peut prendre les valeurs 0; 1; 2; 3; 4; 5; 6; 7; 8; 9; 10 et par «entier allant de 0 à 6», au sens de la présente demande, on entend que ledit entier peut prendre les valeurs 0; 1; 2; 3; 4; 5 ;6.

Selon une première variante de l'invention, le prépolymère polythioéther est obtenu à partir d'au moins un composé T de formule générale (I) : 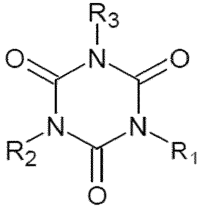 dans laquelle R₁, R₂ et R₃, identiques ou différents, de préférence identiques, sont choisis parmi les groupes suivants :
a) -C₁-₁₀alkyle ;
b) -(CH₂)_{n1b}-SH ;
c) -(CH₂)_{n1c}-O-(CH₂)_{m1c}-SH ;
d) -(CH₂)_{n1d}-O-(CO)-(CH₂)_{m1d}-SH ;
e) -(CH₂)ₙ₁ₑ-(CO)-O-(CH₂)ₘ₁ₑ-SH ;
f) -(CH₂)_{n1f}-O-(CH₂CH₂O)_{l1f}-(CH₂)_{m1f}-SH _{;}
g) -(CH₂)_{n1g}-(CO)-O-(CH₂CH₂O)_{l1g}-(CH₂)_{m1g}-SH ;
h) -(CH₂)ₙ₁ₕ-O-(CO)-(CH₂CH₂O)ₗ₁ₕ-(CH₂)ₘ₁ₕ-SH ;
i) -(CH₂)ₙ₁ᵢ-O-(CH₂CH₂O)ₗ₁ᵢ-(CO)-(CH₂)ₘ₁ᵢ-SH ;
j) -(CH₂)ₙ₁ⱼ-O-(CO)-(CH₂CH₂O)ₗ₁ⱼ-(CO)-(CH₂)ₘ₁ⱼ-SH et
k) -(CH₂)ₙ₁ₖ-(CO)-O-(CH₂CH₂O)ₗ₁ₖ-(CO)-(CH₂)ₘ₁ₖ-SH ;
chacun des n1b, n1e, n1d, n1e, n1f, n1g, n1h, nii, n1j, n1k étant un entier allant de 0 à 10 ; chacun des m1c, m1d, m1e, m1f, m1g, m1h, m1i, m1j, m1k est un entier allant de 0 à 10 ; et chacun des l1f, l1g, l1h, l1i, l1j, l1k étant un entier allant de 0 à 6; à la condition qu'au moins deux radicaux parmi les radicaux R₁, R₂ et R₃ sont choisi parmi les groupes b) à k).

Ledit prépolymère polythioéther peut être obtenu à partir de plusieurs composés T, de formule générale (I) dans laquelle R₁, R₂ et R₃, de préférence identiques, sont choisis, pour chacun des composés T, dans des groupes (a) à (k) tels que définis ci-dessus et à la condition que, pour chacun des composés T, au moins deux radicaux parmi les radicaux R₁, R₂ et R₃ sont choisis parmi les groupes b) à k).

De préférence ledit composé T de formule (I) présente un nombre f de fonctionnalités thiol égal à 3, c'est-à-dire que les radicaux R₁, R₂ et R₃ sont choisis parmi les groupes b) à k).

Avantageusement, ledit prépolymère polythioéther est obtenu à partir d'au moins un composé T de formule générale (I) dans laquelle R₁, R₂ et R₃, identiques, sont choisis dans les groupes d) -(CH₂)_{n1d}-O-(CO)-(CH₂)_{m1d}-SH ou e) -(CH₂)ₙ₁ₑ-(CO)-O-(CH₂)ₘ₁ₑ-SH, de préférence R₁, R₂ et R₃ sont choisis dans le groupe d) -(CH₂)_{n1d}-O-(CO)-(CH₂)_{m1d}-SH ; n1d, m1d, nie et mie étant chacun un entier allant de 0 à 10.

De manière particulière, ledit composé T correspond à la formule générale (I) dans laquelle R₁, R₂ et R₃ sont des groupes d) : -(CH₂)_{n1d}-O-(CO)-(CH₂)_{m1d}-SH avec nid = 2 ou m1d = 2, c'est-à-dire le tris[2-(3-mercaptopropionyloxy)éthyl]isocyanurate de formule :

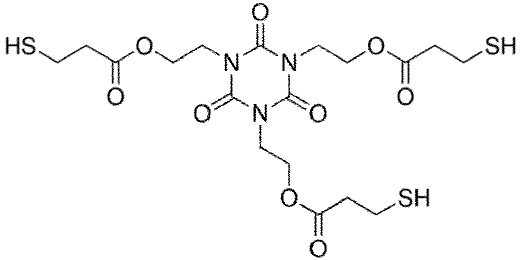

Ce composé est notamment commercialisé par la société Worlée sous la dénomination THIOCURE ^{®} TEMPIC., de masse molaire M : 525 g/mol et de poids équivalent thiols TEW 180-184g/eq.

Selon une deuxième variante de l'invention, le prépolymère polythioéther est obtenu à partir d'au moins un composé T de formule générale (II) : 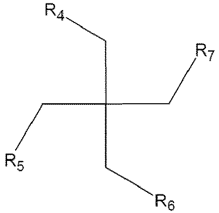 dans laquelle R₄, R₅, R₆ et R₇, identiques ou différents, sont choisis parmi les groupes suivants :
a) -C₁-₁₀ alkyle ;
b) -(CH₂)_{n2b}-SH ;
c) -(CH₂)_{n2c}-O-(CH₂)_{m2c}-SH ;
d) -(CH₂)_{n2d}-O-(CO)-(CH₂)_{m2d}-SH ;
e) -(CH₂)ₙ₂ₑ-(CO)-O-(CH₂)ₘ₂ₑ-SH ;
f) -(CH₂)_{n2f}O-(CH₂CH₂O)_{l2f}-(CH₂)_{m2f}-SH _{;}
g) -(CH₂)_{n2g}-(CO)-O-(CH₂CH₂O)_{l2g}-(CH₂)_{m2g}-SH ;
h) -(CH₂)ₙ₂ₕ-O-(CO)-(CH₂CH₂O)ₗ₂ₕ-(CH₂)ₘ₂ₕ-SH ;
i) -(CH₂)ₙ₂ᵢ-O-(CH₂CH₂O)ₗ₂ᵢ-(CO)-(CH₂)ₘ₂ᵢ-SH ;
j) -(CH₂)ₙ₂ⱼ-O-(CO)-(CH₂CH₂O)ₗ₂ⱼ-(CO)-(CH₂)ₘ₂ⱼ-SH et
k)-(CH₂)ₙ₂ₖ-(CO)-O-(CH₂CH₂O)ₗ₂ₖ-(CO)-(CH₂)ₘ₂ₖ-SH ;
chacun des n2b, n2c, n2d, n2e, n2f, n2g, n2h, n2i, n2j, n2k étant un entier allant de 0 à 10 ; chacun des m2c, m2d, m2e, m2f, m2g, m2h, m2i, m2j, m2k étant un entier allant de 0 à 10 ; chacun des l2f, l2g, l2h, l2i, l2j, l2k étant un entier allant de 0 à 6 ; à la condition qu'au moins deux radicaux parmi les radicaux R₄, R₅, R₆ et R₇ sont choisi parmi les groupes b) à k).

Le prépolymère polythioéther peut être obtenu à partir de plusieurs composés T de formule générale (II) dans laquelle R₄, R₅, R₆ et R₇, sont choisis, pour chacun des composés T, dans des groupes (a) à (k) à la condition que, pour chacun des composés T, au moins deux radicaux parmi les radicaux R₄, R₅, R₆ et R₇ sont choisi parmi les groupes b) à k).

De préférence ledit composé T de formule (II) présente un nombre f de fonctionnalités thiols égal à 3 ou 4 c'est-à-dire que trois ou quatre parmi les radicaux R₄, R₅, R₆ et R₇ sont choisis parmi les groupes b) à k).

Avantageusement, selon une première variante, le prépolymère polythioéther est obtenu à partir d'au moins un composé T de formule générale (II) dans laquelle R₄, R₅, et R₆, identiques sont choisis dans les groupes h) -(CH₂)ₙ₂ₕ-O-(CO)- CH₂CH₂O)ₗ₂ₕ-(CH₂)ₘ₂ₕ-SH ou i) -(CH₂)ₙ₂ᵢ-O-(CH₂CH₂O)ₗ₂i-(CO)-(CH₂)ₘ₂ᵢ-SH et R₇ est choisi dans le groupe a)-C₁-₁₀ alkyle, de préférence R₄, R₅, et R₆, identiques, sont choisis dans le groupe i) -(CH₂)ₙ₂ᵢ-O-(CH₂CH₂O)ₗ₂ᵢ-(CO)-(CH₂)ₘ₂ᵢ-SH et R₇ est choisi dans le groupe a)-C₁-₁₀ alkyle.

De manière préférée, ledit composé T correspond à la formule générale (II) dans laquelle R₄, R₅, et R₆ sont des groupes i) -(CH₂)ₙ₂ᵢ-O-( CH₂CH₂O)ₗ₂ᵢ-(CO)-(CH₂)ₘ₂ᵢ-SH avec n2i =0 et m2i = 2; et R₇ est un groupe méthyle, c'est-à-dire un composé de formule :

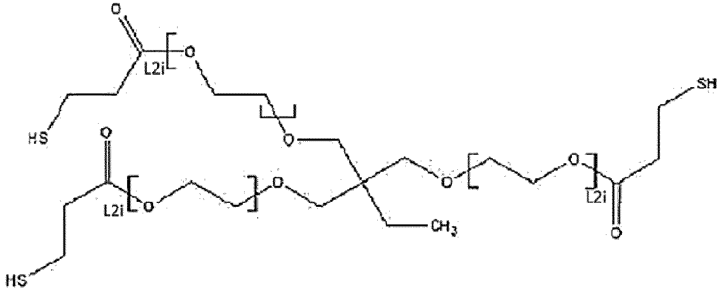

Ce composé dans lequel L2i va de 1 à 5,7 est le triméthylolpropane tri(3-mercaptopropionate) éthoxylé, notamment commercialisé par la société Worlée sous la dénomination Thiocure ^{®} ETTMP 1300 de masse molaire M : 1274 g/mol et de poids équivalent thiols TEW :435-438 g/eq.

Ce composé dans lequel L2i = 0 est le triméthylolpropane tri(3-mercaptopropionate), notamment commercialisé par la société Worlée sous la dénomination Thiocure ^{®} TMPMP de masse molaire M : 399 g/mol et de poids équivalent thiols TEW :136-140 g/eq.

Selon un autre mode préféré, ledit composé T correspond à la formule générale (II) dans laquelle R₄, R₅, R₆ et R₇, identiques, sont choisis dans les groupes h) -(CH₂)ₙ₂ₕ-O-(CO)-(CH₂CH₂O)ₗ₂ₕ-(CH₂)ₘ₂ₕ-SH ou i) -(CH₂)ₙ₂ᵢ-O-(CH₂CH₂O)ₗ₂ᵢ-(CO)-(CH₂)ₘ₂ᵢ-SH, de préférence dans le groupe i) -(CH₂)ₙ₂ᵢ-O-(CH₂CH₂O)ₗ₂ᵢ(CO)-(CH₂)ₘ₂ᵢ-SH.

Selon une troisième variante de l'invention, le prépolymère polythioéther est obtenu à partir d'au moins un composé T de formule générale (III) 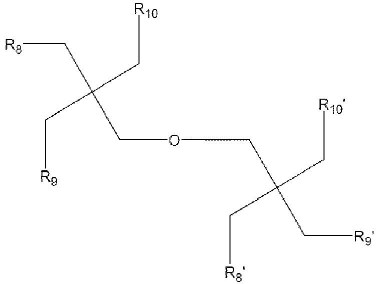 dans laquelle R₈, R₉, R₁₀, R_{8'}, R_{9'} et R_{10'}, identiques ou différents, sont choisis parmi les groupes suivants
a) -C₁-₁₀ alkyle ;
b) -(CH₂)_{n3b}-SH ;
c) -(CH₂)_{n3c}-O-(CH₂)_{m3c}-SH;
d) -(CH₂)_{n3d}-O-(CO)-(CH₂)_{m3d}-SH ;
e) -(CH₂)ₙ₃ₑ-(CO)-O-(CH₂)ₘ₃ₑ-SH ;
f) -(CH₂)_{n3f}-O-(CH₂CH₂O)_{l3f}-(CH₂)_{m3f}-SH _{;}
g) -(CH₂)_{n3g}-(CO)-O-(CH₂CH₂O)_{l3g}-(CH₂)_{m3g}-SH ;
h) -(CH₂)ₙ₃ₕ-O-(CO)-(CH₂CH₂O)ₗ₃ₕ-(CH₂)ₘ₃ₕ-SH ;
i) -(CH₂)ₙ₃ᵢ-O-(CH₂CH₂O)ₗ₃ᵢ-(CO)-(CH₂)ₘ₃ᵢ-SH ;
j) -(CH₂)ₙ₃ⱼ-O-(CO)-(CH₂CH₂O)ₗ₃ⱼ-(CO)-(CH₂)ₘ₃ⱼ-SH et
k) -(CH₂)ₙ₃ₖ-(CO)-O-(CH₂CH₂O)ₗ₃ₖ-(CO)-(CH₂)ₘ₃ₖ-SH ;
chacun des n3b, n3c, n3d, n3e, n3f, n3g, n3h, n3i, n3j, n3k étant un entier allant de 0 à 10 ; chacun des m3c, m3d, m3e, m3f, m3g, m3h, m3i, m3j, m3k étant un entier allant de 0 à 10 ; chacun des l3f, l3g, l3h, l3i, l3j, l3k étant un entier allant de 0 à 6; à la condition qu'au moins deux radicaux parmi les radicaux R₈, R₉, R₁₀, R_{8'}, R_{9'} et R_{10'} sont choisi parmi les groupes b) à k).

Le prépolymère polythioéther peut être obtenu à partir de plusieurs composés T, de formule générale (III) dans laquelle R₈, R₉, R₁₀, R_{8'}, R_{9'} et R_{10'}, de préférence identiques, sont choisis, pour chacun des composés T, dans des groupes (a) à (k) à la condition qu'au moins deux radicaux parmi les radicaux R₈, R₉, R₁₀, R_{8'}, R_{9'} et R₁₀, sont choisi parmi les groupes b) à k).

De préférence ledit composé T de formule (III) présente un nombre f de fonctionnalités thiol égal à 6 c'est-à-dire que les radicaux R₈, R₉, R₁₀, R_{8'}, R_{9'} et R_{10'} sont choisis parmi les groupes b) à k).

Avantageusement, le prépolymère polythioéther est obtenu à partir d'au moins un composé T de formule générale (III) dans laquelle R₈, R₉, R₁₀, R_{8'}, R_{9'} et R_{10'},identiques, sont choisis dans les groupes h) -(CH₂)ₙ₃ₕ-O-(CO)-(CH₂CH₂O)ₗ₃ₕ-(CH₂)ₘ₃ₕ-SH ou i) -(CH₂)ₙ₃ᵢ-O-( CH₂CH₂O)ₗ₃ᵢ-(CO)-(CH₂)ₘ₃ᵢ-SH, de préférence R₈, R₉, R₁₀, R_{8'}, R_{9'} et R_{10'},identiques, sont choisis dans le groupe i) - (CH₂)ₙ₃ᵢ-O-(CH₂CH₂O)ₗ₃ᵢ-(CO)-(CH₂)ₘ₃ᵢ-SH.

De manière particulière le composé de formule (III) est tel que n3i =0, l3i = 0 et m3i = 2, c'est à dire le dipentaerythritol hexa(3-mercaptopropionate), notamment commercialisé par la société Worlée sous la dénomination Thiocure ^{®} DiPETMP de masse molaire M : 783 g/mol et de poids équivalent thiols TEW : 135-140 g/eq.

Selon une quatrième variante de l'invention le prépolymère polythioéther est obtenu à partir d'au moins un composé T de formule générale (IV) :HS-R₁₁-SH avec R₁₁ choisi parmi les groupes suivants : -(CH₂)_{q}-(CO)-O-(CH₂ CH₂)-O-(CO)-(CH₂)ₛ-; -[(CH₂)_{q}-O]ᵣ-(CH₂)ₛ- et
-[(CH₂)_{q}-S]ᵣ-(CH₂)ₛ-, avec q est un entier allant de 2 à 6, r est un entier allant de 1 à 5 et s est un entier allant de 2 à 10.

Lorsque le prépolymère polythioéther selon l'invention est préparé à partir seulement d'un ou plusieurs composé(s) T de formule (IV), alors le composé E est choisi parmi les composés de formule (VI).

De préférence le composé de formule (IV) est choisi dans le groupe formé par le di(3-mercaptopropionate) de glycol de formule : HS-(CH₂)₂-(CO)-O-(CH₂CH₂)-O-(CO)-(CH₂)₂-SH ;
le dimercaptodioxaoctane (DMDO) de formule : HS-[(CH₂)₂-O]₂-(CH₂)₂-SH et le dimercaptodiéthylsulfure de formule : HS-[(CH₂)₂-S]-(CH₂)₂-SH. Le DMDO présente un poids équivalent thiols TEW de 91.15 g/eq..

Le di(3-mercaptopropionate) de glycol est notamment commercialisé par la société Worlée sous la dénomination Thiocure ^{®} GDMP de masse molaire M : 238 g/mol et de poids équivalent thiols TEW : 122-125 g/eq.

Le prépolymère polythioéther selon la présente invention peut être obtenu à partir de plusieurs composés T différents, en particulier 2, 3 ou 4 composés T, chacun choisi parmi les composés de formules générales (I), (II), (III), et (IV). Des mélanges de composés T choisis parmi les composés de formules générales (I), (II), (III), et (IV), de préférence parmi les composés de formules générales (I), (II) et (III), en toutes proportions, peuvent être effectués en fonction notamment de la fonctionnalité thiol moyenne dudit prépolymère polythioéther souhaitée.

Avantageusement, le prépolymère polythioéther est obtenu à partir d'au moins un composé E de formule (V) : 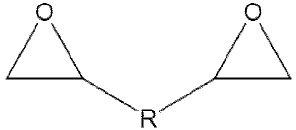 avec R est un groupe - C₁₋₆ Alk-O-R'-C₁₋₆ Alk - et R' est un groupe comprenant au moins un radical choisi parmi les radicaux: -C₁₋₆ Alk; -C₁₋₆ Alk-O-; -C₆₋₁₀ Aryl-; - C₆₋₁₀ Aryl-O-; les radicaux - C₆₋₁₀ Aryl-; -C₆₋₁₀ Aryl-O- étant non substitués ou substitués par au moins un groupement choisi parmi les -C₁₋₆ alkyle et époxyde.

De préférence R' ne comprend pas de groupes susceptibles de réagir avec un groupe thiol à l'exception de groupes époxydes.

De préférence R' est choisi dans le groupe constitué par les groupes suivants :

-(C₁₋₆Alk-O-)ₙ- ;

-C₆₋₁₀Aryl-(C₁₋₆Alk-C₆₋₁₀Aryl-O-)ₙ- ;

-C₆₋₁₀Aryl-(C₁₋₆Alk-C₆₋₁₀Aryl-)ₙ- ;

-C₆₋₁₀ Aryl - C₁₋₆ Alk - C₆₋₁₀ Aryl-substitué époxy - C₁₋₆ Alk - C₆₋₁₀ Aryl- ;

avec n étant compris entre 0 et 5.

### Au sens de l'invention :

Par « Alk », on entend un groupe alkyle ou alkylène. « - C₁₋₋₆ Alk-» signifie une chaine alkylène linéaire ou ramifiée comprenant de 1 à 6 atomes de carbone ; de préférence un groupe méthylène (-CH₂-) ou éthylène (- CH₂-CH₂-) ; -C₆₋₁₀ Aryl- signifie un groupe arylène c'est-à-dire un groupe cyclique aromatique comprenant de 6 à 10 atomes de carbone, de préférence un groupe phénylène.

De préférence la masse molaire du composé E de formule (V) va de 300 à 700 g/mol.

Selon une première variante, ledit composé E est le diglycidyl éther de bisphenol A, encore appelé DGEBA, de formule

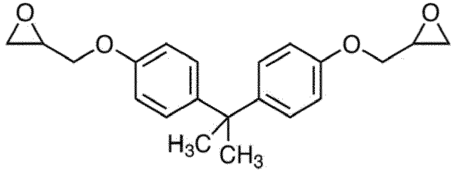

Ce produit est notamment commercialisé sous la dénomination Epon^{®}828 par la société Hexion. Sa masse molaire M est de 340.42g/mol et son poids équivalent d'époxydes (EEW) allant de 185 à 192g/eq.

Le composé E peut également se présenter sous la forme de billes de butadiène dans du diglycidyl éther de bisphenol A (DGEBA), ce produit est commercialisé sous la dénomination Kane Ace MX ^{®}154 par la société Kaneka^{®}, de poids équivalent d'époxydes (EEW): 301 g/eq.

Selon une deuxième variante, le composé E le correspond à la formule est le diglycidyl éther de bisphenol F, encore appelé DGEBF, de formule :

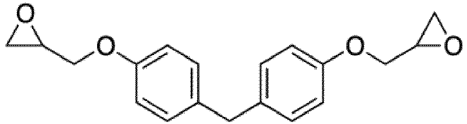

Ce produit est notamment commercialisé sous la dénomination DER 354 par la société The Dow Chemical Company. Sa masse molaire M est de 345 g/mol et son poids équivalent d'époxydes (EEW) allant de 150 à 180 g/éq.

Selon une troisième variante, le composé E le correspond à la formule (VI) : 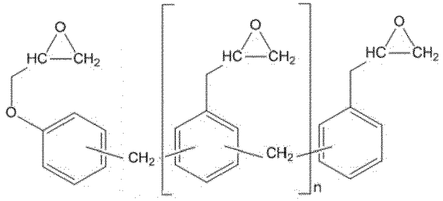 dans laquelle n va de 0 à 1.

Ces produits sont notamment des résines époxy novolaques commercialisés sous la dénomination D.E.N. 438^{®} par la société Dow, son poids équivalent d'époxydes (EEW) va de 176 à 181 g/éq.

Selon une troisième variante, le composé E le correspond à la formule : 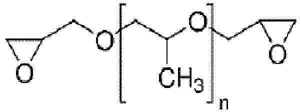 dans laquelle n va de 1 à 3.

Ces produits sont notamment des résines époxy commercialisés sous la dénomination D.E.R 732P par la société Dow, son poids équivalent d'époxydes (EEW) va de 310 à 330 g/éq.

Comme déjà mentionné, la présente invention concerne également un procédé de préparation du prépolymère polythioéther selon la présente invention comprenant au moins les étapes suivantes :
- disposer d'au moins un composé T présentant un nombre f de fonctionnalités thiol choisi dans le groupe constitué par les fonctionnalités 2,3, 4 et 6 ;
- ajouter, audit composé T, au moins un composé E présentant un nombre g de fonctionnalités époxyde choisi dans le groupe constitué par les fonctionnalités 2 ou 3, avantageusement en une quantité telle que le rapport nombre de groupes thiols : nombre de groupes époxy des allant de 3 :1 à 4 :1 ;
- ajouter un catalyseur avant et/ou après l'ajout dudit composé E,
- agiter le mélange réactionnel comprenant les composé(s) E et composé(s) T et le catalyseur,
- récupérer le prépolymère polythioéther obtenu.

Avantageusement, la quantité en composé(s) T va de 60 à 80 moles pour 100 moles de mélange réactionnel, de préférence la quantité en composé(s) T va de 60 à 80 % en moles par rapport à la somme de composé(s) T et composé(s) E.

Avantageusement, la préparation du prépolymère est réalisée en utilisant deux composés T différents.

Avantageusement, la quantité en composé(s) E va de 20 à 40 moles pour 100 moles de mélange réactionnel, de préférence la quantité en composé(s) E va de 20 à 40 % en moles par rapport à la somme de composé(s) T et composé(s) E.

Avantageusement, le rapport molaire du ou des composé(s) T : le ou les composé(s) E est compris entre 3 :1 et 4 :1.

Lorsque plusieurs composés T et/ou E sont utilisés, le rapport molaire du ou des composé(s) T / le ou les composé(s) E correspond au rapport des sommes pondérées des fonctionnalités c'est-à-dire le rapport : Σ (pourcentage molaire de chaque composé T x fonctionnalité dudit composé T) / Σ (pourcentage molaire de chaque composé E x fonctionnalité dudit composé E).

Ainsi le prépolymère est préparé avec un excès molaire de composés T et un excès de groupes thiols par rapport aux groupes époxydes. Le prépolymère comprend des groupes thiols en particulier présents à la surface du prépolymère, ces groupes thiols du prépolymère seront aptes à réagir avec les fonctions réactives d'un autre monomère, oligomère.

A titre de catalyseur utilisable, on peut citer le 1,8-diazabicyclo[5.4.0]undec-7-ene (DBU) ou encore la N,N-diméthylbenzylamine. Généralement la quantité de catalyseur utilisée va de 0,001 à 5% de préférence de 0,1 à 2 et de manière préférée de 0,2 à 1 % en poids par rapport au poids du milieu réactionnel de préférence par rapport à la somme des poids de catalyseur, de composé(s) E et de composé(s) T.

Généralement la réaction est effectuée à température ambiante, cependant la réaction étant exothermique, la température augmente spontanément pendant la réaction jusqu'à une température comprise entre 60 et 70 °C. Au besoin, la réaction est effectuée dans un récipient muni d'un système réfrigérant. Généralement, la durée de la réaction va de 10 à 120 minutes, de préférence de 20 à 60 minutes.

La réaction entre les composé(s) E et composé(s) T est généralement effectuée sans solvants. Cependant, un solvant peut être utilisé, il est en particulier choisi dans le groupe constitué par l'acétate d'éthyle, l'acétate de 3 méthyle butyle, l'acétate de 3 méthyle éthyle, le toluène, le xylène.

### Composition durcissable

La présente invention vise encore une composition comprenant au moins un prépolymère polythioéther selon l'invention ou préparé suivant le procédé de préparation selon l'invention ledit prépolymère polythioéther ayant une fonctionnalité thiol choisie parmi les fonctionnalités 2 ,3, 4, 5 et 6, et au moins un oligomère choisi parmi les oligomères modifiés (méth)acrylates et les prépolymères époxydes, la somme des fonctionnalités du prépolymère polythioéther et de l'oligomère étant supérieure à 4.

Cette composition est durcissable par la formation d'un polymère réticulé, la composition peut aussi être qualifiée de composition polymérisable /réticulable.

La présente invention vise aussi un polymère polythioéther est obtenu par la réaction d'au moins un prépolymère polythioéther selon l'invention ou préparé suivant le procédé de préparation selon l'invention, ledit prépolymère polythioéther ayant une fonctionnalité thiol choisie parmi les fonctionnalités 2 ,3, 4, 5 et 6 avec au moins un oligomère choisi parmi les oligomères modifiés (méth)acrylates et les prépolymères époxydes, la somme des fonctionnalités thiols du prépolymère polythioéther et des fonctionnalités (méth)acrylates ou époxydes de l'oligomère étant supérieure à 4.

Généralement la composition est obtenue à partir d'au moins un prépolymère polythioéther et d'au moins un oligomère en un rapport molaire prépolymère polythioéther : oligomère allant de 0.7/1 à 1.3/1, de préférence allant de 0.9/1 à 1.1/1 et de manière préférée un rapport environ stoechiométrique 1/1.

### Oligomères

Selon une première variante de la composition, l'oligomère est un oligomère modifié (méth)acrylate, de préférence un oligomère di, tri ou tétra modifié (méth)acrylate, ayant une fonctionnalité (méth)acrylate est choisie parmi les fonctionnalités 2 ,3, 4, 5 et 6, la somme des fonctionnalités thiols du prépolymère polythioéther et des fonctionnalités (méth)acrylates de l'oligomère modifié (méth)acrylate étant supérieure à 4.

Les oligomères modifiés (méth)acrylates sont des oligomères sur lesquels ont été introduits des terminaisons acrylates ou méthacrylates généralement par polyaddition. De préférence l'oligomère modifié (méth)acrylate est un oligomère di, tri ou tétra modifié (méth) acrylate.

De manière préférée, l'oligomère modifié (méth)acrylate est choisi dans le groupe formé par les uréthanes modifiés (méth)acrylate, les butadiènes modifiés (méth)acrylate, les éthers aliphatiques modifiés (méth)acrylate, le diglycidyl éther de bisphenol A modifié (méth)acrylate.

A titre d'exemple d'oligomères modifiés (méth)acrylate utilisables dans les compositions selon la présente invention, on peut citer le méthacrylate uréthane commercialisé sous la dénomination CN 1964 par la société Sartomer^{®} (groupe Arkema), le polybutadiène diacrylate encore appelé PBDDA commercialisé sous la dénomination SR 307 par la société Sartomer^{®}, le néopentylglycolméthacrylate commercialisé sous la dénomination SR 802 par la société Sartomer^{®} et le 2 bisphénol A diméthacrylate éthoxylé encore appelé BPA2EODMA commercialisé sous la dénomination SR 348 L par la société Sartomer^{®}.

Selon une deuxième variante de la composition, l'oligomère est un prépolymère époxyde, la somme des fonctionnalités thiols du prépolymère polythioéther et des fonctionnalités époxydes de l'oligomère étant supérieure à 4.

A titre d'exemple de prépolymères époxydes utilisables dans les compositions selon la présente invention, on peut citer les éthers polyglycidyliques de bisphénol A, tels que les résines époxy Epon^{®} 828, et les diépoxydes de bisphénol F, tels que Epon^{®} 862, commercialisé par la société Hexion Specialty Chemicals, Inc. On peut également utiliser des pré polymères époxydes contenants des Core Shell Rubber. On peut également citer les polyépoxydes qui sont obtenus par époxydation d'un composé alicyclique à insaturation oléfinique, les polyépoxydes qui sont obtenus par époxydation d'un composé cyclique non aromatique à insaturation oléfinique insaturée, les polyépoxydes contenant des groupes oxyalkylène et les résines époxy novolaques. D'autres composés contenant des groupes époxy utilisables sont les novolaques de bisphénol A époxydées, les novolaques phénoliques époxydées, la novolaque crésylique époxydée.

La composition selon l'invention est avantageusement une composition à deux composants c'est-à-dire deux parties, la partie A et la partie B, qui sont conservées séparément et mélangés au moment de l'emploi.

Ladite composition est durcissable, c'est-à-dire que les deux parties constituant cette composition : la composition de base nommée composition partie B comprenant le prépolymère polythioéther selon l'invention et l'accélérateur nommé composition-partie A comprenant l'oligomère sont susceptibles de réagir selon une réaction de polymérisation/réticulation lorsqu'elles sont mises en présence, cette réaction conduisant à un polymère tridimensionnel réticulé.

De préférence cette réaction est effectuée dans des conditions sensiblement stoechiométriques c'est-à-dire avec des quantités de réactifs telles que le nombre de fonctions thiol -du prépolymère polythioéther- est égale au nombre de fonctions aptes à réagir avec les fonctions thiols du prépolymère choisies parmi les fonctions (méth)acrylate et époxydes.

Cette réaction peut être effectuée en présence d'un catalyseur. Cependant, de préférence cette réaction est effectuée sans ajout de catalyseur, notamment sans ajout de catalyseur, autre que celui déjà utilisé lors de la préparation du prépolymère polythioéther.

Avantageusement la réaction a lieu sans activation par une source extérieure d'énergie. La réaction est généralement effectuée dans des conditions douces notamment à température ambiante, 20°C.

Avantageusement, la composition selon l'invention comprend au moins une charge choisie parmi les charges organiques et les charges inorganiques, de préférence la quantité en charge(s) est comprise entre 0 et 50 % en poids par rapport au poids total de ladite composition. A titre de charges inorganiques, on peut citer : le carbonate de calcium, la silice vitreuse, les silicates notamment choisis dans le groupe formé par le talc, le mica, le kaolin. A titre de charges organiques, on peut citer les polymères suivants : le polyéthylène PE, le polyamide (PA), le polyimide (PI) et le polyphénylène Sulfone (PPS).

La composition partie A comprend généralement au moins un additif choisi dans le groupe constitué par les promoteurs d'adhérence, les pigments, les plastifiants, les tensio-actifs, les agents modificateurs de la rhéologie. La quantité en chacun des additifs de la composition partie A est généralement comprise entre 0 et 10% en poids par rapport au poids total de la composition partie A.

La composition partie B comprend généralement au moins un additif choisi dans le groupe constitué par les promoteurs d'adhérence, les pigments, les plastifiants, les tensio-actifs, les agents modificateurs de la rhéologie. De préférence la partie B comprend un composé silane promoteur d'adhérence.

La quantité en chacun des additifs de la composition partie B est généralement comprise entre 0 et 10% en poids par rapport au poids total de la composition partie B.

Généralement la quantité de la composition partie A va de 30% à 70% ; de préférence 50 % en poids par rapport au poids total de la composition durcissable. Généralement la quantité de la composition partie B va 30% à 70% ; de préférence 50 % en poids par rapport au poids total de la composition durcissable.

Avantageusement la composition selon la présente invention est utilisée en tant qu'enduit d'étanchéité ou mastic, c'est-à -dire des produits capables de bloquer le passage de l'eau, de la vapeur d'eau, des solvants liquides ou gazeux, de préférence elle comprend au moins une charge organique ou inorganique. Après réticulation, la composition selon l'invention acquiert des propriétés de résistances aux solvants, en particulier aux hydrocarbures.

Généralement, la partie A et la Partie B sont mélangées et la composition selon la présente invention ainsi obtenue est appliquée sur ou dans la zone à étanchéifier.

Les exemples qui suivent visent à illustrer l'invention sans en limiter la portée.

### Exemples

### Exemple 1 conforme

Le prépolymère polyéther PTE1 est préparé de la manière suivante : dans un récipient on introduit les composés T dans les quantités mentionnées dans le tableau 1, puis on ajoute les composés E dans les quantités mentionnées dans le tableau 1 ainsi que le catalyseur sous agitation. L'agitation est maintenue pendant 30 minutes. La réaction est exothermique, on contrôle la température qui passe de 20 à 70°C. On récupère le prépolymère polyéther PTE1 formé. Le rapport nombre de groupes thiols/ nombre de groupes époxydes est de 3,3.

Puis une composition de mastic conforme à l'invention a été préparée en mélangeant 100g de composition Part B1 contenant le prépolymère polyéther PTE1 conforme à l'invention et 50g de composition Part A1 contenant un oligomère modifié méthacrylate. Les composants des compositions Part B1 et Part A1 sont consignés dans le tableau1.

**[Tableau 1]**

| **Composition du PTE 1** | | | |
|---|---|---|---|
| Composant | Dénomination | Quantité (en g) | Nombre de groupes thiols ou époxydes |
| Composé T de fonctionnalité 3 | Thiocure ^{®} TMPMP (TEW :136-140 g/eq.) | 35,28 | 0,255 eq.thiols (35,28/138) |
| composé T de fonctionnalité 3 | Thiocure ^{®} ETTMP 1300 (TEW: 435-438 g/eq) | 37,59 | 0,086 eq.thiols |
| composé E de fonctionnalité 2 | Kane Ace MX ^{®}154 (EEW: 301g/eq) | 18,67 | 0,062 eq.epox (18.67/301) |
| composé E de fonctionnalité 2 | Epon^{®}828 (EEW: 185 - 192g/eq.) | 7,92 | 0,042 eq.epoxydes |
| catalyseur | DBU | 0,54 | - |

| **Composition de Part B1** | | | |
|---|---|---|---|
| Composant | Dénomination | Quantité (en g) | |
| PTE1 | | 65,14 | |
| Carbonate de calcium | Calofort U commercialisé par Speciality Minerals | 17,53 | |
| Silice | O Micron NP3-P0 commercialisé par Sovitec | 13,93 | |
| Charges organiques | Expancel commercialisé par Nouryon | 0,25 | |
| Fumée de silice | Cabot-Si! TS 720 commercialisé par Cabot | 3,15 | |

| **Composition de Part A1** | | | |
|---|---|---|---|
| Composant | Dénomination | Quantité (en g) | |
| oligomère modifié méthacrylate | SR 348 L commercialisé par Sartomer^{®} | 92,12 | |
| Pigment | Phtalocyanine commercialisé par Heubach | 0,09 | |
| Fumée de silice | Cabot-Sil TS 720 commercialisé par Cabot | 4,07 | |
| Promoteur d'adhérence | Dynasilane 1146 commercialisé par Evonik | 3,72 | |

Les propriétés de ce mastic sont rassemblées dans le tableau 2.

**[Tableau 2]**

| Propriété | Unité | Méthode de test | Valeur |
|---|---|---|---|
| Densité | g/cm3 | ISO 2781 | 1,12 |
| Dureté Shore A | Shore A | ISO 868 | 60 |
| Contrainte en pelage | N/25 mm | AMS 3281 | 75 |
| Contrainte en cisaillement | MPa | EN 2243-1 | 1,9 |

En outre le temps d'application du mastic préparé selon l'exemple 1 est de 2 heures à température ambiante, ce qui correspond à un mastic de classe B-2.

### Exemple 2 conforme

Le prépolymère polyéther PTE2 est préparé de la manière suivante : dans un récipient on introduit les composés T dans les quantités mentionnées dans le tableau 3, puis on ajoute le composé E dans la quantité mentionnée dans le tableau 3 ainsi que le catalyseur sous agitation. L'agitation est maintenue pendant 40 minutes. La réaction est exothermique, on contrôle la température qui passe de 20 à 70°C. On récupère le prépolymère polyéther PTE2 formé. Le rapport nombre de groupes thiols/ nombre de groupes époxydes est de 4.

Puis une composition de mastic conforme à l'invention a été préparée en mélangeant 100g de composition Part B2 contenant le prépolymère polyéther PTE2 conforme à l'invention et 45 g de composition Part A2 contenant un oligomère modifié méthacrylate. Les composants des compositions Part B2 et Part A2 sont consignés dans le tableau 3.

**[Tableau 3]**

| **Composition du PTE 2** | | | |
|---|---|---|---|
| Composant | Dénomination | Quantité (en g) | Nombre de groupes thiols ou époxydes |
| composé T de fonctionnalité 3 | Thiocure ^{®} TEMPIC (TEW 180-184g/eq.) | 55,35 | 0.304 eq.thiols |
| composé T de fonctionnalité 3 | Thiocure ^{®} ETTMP 1300 (TEW : 435-438 g/eq) | 18,71 | 0.043 eq.thiols |
| composé E de fonctionnalité 2 | Kane Ace MX ^{®}154 (EEW: 301g/eq) | 25,48 | 0.084 eq.époxydes |
| catalyseur | DBU | 0,46 | |

| **Composition de Part B2** | | | |
|---|---|---|---|
| Composant | Dénomination | Quantité (en g) | |
| PTE2 | | 68,96 | |
| Carbonate de calcium | Calofort U | 29,54 | |
| Phosphate de zinc et de calcium | ZCP commercialisé par Heubach | 1,17 | |
| Promoteur d'adhérence | Dynasilane MTMO commercialisé par Evonik | 0,33 | |

| **Composition de Part A2** | | | |
|---|---|---|---|
| Composant | Dénomination | Quantité (en g) | |
| Oligomère modifié méthacrylate | SR 348 L ^{®} | 95,48 | |
| Pigment | Phtalocyanine | 0,10 | |
| Fumée de silice | Cabot-Sil TS 720 | 3,92 | |
| Promoteur d'adhérence | Dynasilane MTMO | 0,50 | |

Les propriétés de ce mastic sont rassemblées dans le tableau 4.

**[Tableau 4]**

| Propriété | Unité | Méthode de test | Valeur |
|---|---|---|---|
| Densité | g/cm3 | ISO 2781 | 1,35 |
| Dureté Shore A | Shore A | ISO 868 | 40 |
| Contrainte en pelage | N/25 mm | AMS 3281 | 90 |
| Contrainte en cisaillement | MPa | EN 2243-1 | 1,2 |

En outre le temps d'application du mastic préparé selon l'exemple 2 est de 2 heures à température ambiante, ce qui correspond à un mastic de classe B-2.

### Exemple 3 comparatif

Puis une composition de mastic conforme à l'invention a été préparée en mélangeant 100g de composition Part B3 contenant le prépolymère polyéther PTE2 conforme à l'invention et 13,8 g de composition Part A3 contenant un diène. Les composants des compositions Part B3 et Part A3 sont consignés dans le tableau 5.

**[Tableau 5]**

| **Composition de Part B3** | | |
|---|---|---|
| Composant | Dénomination | Quantité (en g) |
| PTE2 | | 65,14 |
| Carbonate de calcium | Calofort U | 17,53 |
| Silice | O Micron NP3-P0 | 13,93 |
| Charges organiques | Expancel | 0,25 |
| Fumée de silice | Cabot-Sil TS 720 | 3,15 |

| **Composition de Part A3** | | |
|---|---|---|
| Composant | Dénomination | Quantité (en g) |
| Diène | DEG-DVE commercialisé par Sartomer^{®} | 100 |

Les propriétés de ce mastic sont rassemblées dans le tableau 8

**[Tableau 6]**

| Propriété | Unité | Méthode de test | Valeur |
|---|---|---|---|
| Densité | g/cm3 | ISO 2781 | 1,15 |
| Dureté Shore A | Shore A | ISO 868 | <20 |

Le mastic obtenu présente une dureté très faible. De plus ce mastic n'est obtenu qu'après 3 jours de réticulation à température ambiante ce qui n'est pas acceptable. En outre le temps de polymérisation n'a pas pu être diminué même en augmentant le taux de catalyseur.

### Exemple 4 conforme

Le prépolymère polyéther PTE4 est préparé de la manière suivante : dans un récipient on introduit les composés T dans les quantités mentionnées dans le tableau 7, puis on ajoute le composé E dans la quantité mentionnée dans le tableau 7 ainsi que le catalyseur sous agitation. L'agitation est maintenue pendant 40 minutes. La réaction est exothermique, on contrôle la température qui passe de 20 à 70°C. On récupère le prépolymère polyéther PTE4 formé. Le rapport nombre de groupes thiols/ nombre de groupes époxydes est de 3,1.

Puis une composition de mastic conforme à l'invention a été préparée en mélangeant 100g de composition Part B4 contenant le prépolymère polyéther PTE4 conforme à l'invention et 138,9 g de composition Part A4 contenant deux oligomères modifiés méthacrylates. Les composants des compositions Part B4 et Part A4 sont consignés dans le tableau 7.

**[Tableau 7]**

| **Composition du PTE 4** | | | |
|---|---|---|---|
| Composant | Dénomination | Quantité (en g) | Nombre de groupes thiols ou époxydes |
| Composé T de fonctionnalité 2 | DMDO (TEW: 91,15 g/eq.) | 11,50 | 0,126 eq.thiols 11,5/91,15 |
| composé T de fonctionnalité 3 | Thiocure ^{®} TEMPIC (TEW 180-184g/eq.) | 47,60 | 0.261 eq.thiols |
| composé E de fonctionnalité 2 | DER 732 P (TEW 310-330g/eq.) | 40 | 0.125 eq.epox |
| catalyseur | DBU | 0,90 | - |

| **Composition de Part B4** | | | |
|---|---|---|---|
| Composant | Dénomination | Quantité (en g) | |
| **PTE4** | | 85,41 | |
| Promoteur d'adhérence | Durez 11078 | 2,56 | |
| catalyseur | DBU | 0,13 | |
| Carbonate de calcium | Calofort U commercialisé par Speciality Minerals | 2,91 | |
| Silice en pétales | Glass flakes GF 750 M | 5,23 | |
| Promoteur d'adhérence | Dynasilane MTMO | 0,86 | |
| Charges creuses | Expancel DE40 D30 commercialisé par Nouryon | 1,27 | |
| Pigment | Dioxyde de titane | 0,86 | |
| Fumée de silice | Cabot-Sil TS 720 | 0,77 | |

| **Composition de Part A4** | | | |
|---|---|---|---|
| Composant | Dénomination | Quantité (en g) | |
| oligomère modifié méthacrylate | SR 348 L commercialisé par Sartomer^{®} | 53,84 | |
| oligomère modifié méthacrylate | SR 307 commercialisé par Sartomer^{®} | 8,08 | |
| Silice en pétales | Glass flakes GF 001 Epoxy | 16,00 | |
| Carbonate de calcium | Calofort U | 18,72 | |
| Pigment | Phtalocyanine | 0,02 | |
| Fumée de silice | Cabot-Sil TS 720 | 1,72 | |
| Promoteur d'adhérence | Dynasilane 1146 | 1,62 | |

Les propriétés de ce mastic sont rassemblées dans le tableau 8.

**[Tableau 8]**

| Propriété | Unité | Méthode de test | Valeur |
|---|---|---|---|
| Densité | g/cm3 | ISO 2781 | 1,35 |
| Dureté Shore A | Shore A | ISO 868 | 55 |
| Contrainte en pelage | N/25 mm | | 50 |
| Contrainte en cisaillement | MPa | EN 2243-1 | 1,15 |

En outre le temps d'application du mastic préparé selon l'exemple 4 est de 2 heures à température ambiante ou de 30 min à 150°C.

### Exemple 5 (conforme)

Le prépolymère polyéther PTE5 est préparé de la manière suivante : dans un récipient on introduit les composés T dans les quantités mentionnées dans le tableau 7, puis on ajoute les composés E dans la quantité mentionnée dans le tableau 9 ainsi que le catalyseur sous agitation. L'agitation est maintenue pendant 40 minutes. La réaction est exothermique, on contrôle la température qui passe de 20 à 70°C. On récupère le prépolymère polyéther PTE5 formé. Le rapport nombre de groupes thiols/ nombre de groupes époxydes est de 3,0.

Puis une composition de mastic conforme à l'invention a été préparée en mélangeant 100g de composition Part B5 contenant le prépolymère polyéther PTE5 conforme à l'invention et 108 g de composition Part A5 contenant deux prépolymères époxydes. Les composants des compositions Part B5 et Part A5 sont consignés dans le tableau 9.

**[Tableau 9]**

| **Composition du PTE 5** | | | |
|---|---|---|---|
| Composant | Dénomination | Quantité (en g) | Nombre de groupes thiols ou époxydes |
| Composé T de fonctionnalité 2 | DMDO (TEW: 91.15 g/eq.) | 53,46 | 0,586 eq.thiols |
| composé T de fonctionnalité 3 | Thiocure ^{®} TEMPIC (TEW 180-184g/eq.) | 1,99 | 0.011 eq.thiols |
| composé E de fonctionnalité 2 | DER 732 P (TEW 310-330g/eq.) | 20,94 | 0.065 eq.epox |
| composé E de fonctionnalité 2 | DER 332 P (TEW 170-175g/eq.) | 22,94 | 0.133eq.epox |
| catalyseur | DBU | 0,67 | - |

| **Composition de Part B5** | | | |
|---|---|---|---|
| Composant | Dénomination | Quantité (en g) | |
| **PTE5** | | 82,23 | |
| **Solvant** | Acétate d'éthyle | 5,02 | |
| Promoteur d'adhérence | Durez 11078 | 2,47 | |
| catalyseur | DBU | 0,13 | |
| Carbonate de calcium | Calofort U | 2,79 | |
| Silice en pétales | Glass flakes GF 750 M | 5,06 | |
| Pigment | Dioxyde de titane | 0,82 | |
| Promoteur d'adhérence | Dynasilane MTMO | 0,82 | |
| Charges creuses | Expancel DE40 D30 | 0,66 | |

| **Composition de Part A5** | | | |
|---|---|---|---|
| Composant | Dénomination | Quantité (en g) | |
| Prépolymère époxyde | DEN 431 | 26,08 | |
| Prépolymère époxyde | DEN 332 | 26,08 | |
| Plastifiant | Benzoflex 9-88 | 10,95 | |
| Silice en pétales | Glass flakes GF 001 Epoxy | 15,28 | |
| Carbonate de calcium | Calofort U | 18,36 | |
| Pigment | Phtalocyanine | 0,02 | |
| Fumée de silice | Cabot-Sil TS 720 | 1,67 | |
| Promoteur d'adhérence | Dynasilane 1146 | 1,56 | |

Les propriétés de ce mastic sont rassemblées dans le tableau 10.

**[Tableau 10]**

| Propriété | Unité | Méthode de test | Valeur |
|---|---|---|---|
| Densité | g/cm3 | ISO 2781 | 1,15 |
| Dureté Shore A | Shore A | ISO 868 | 45 |
| Contrainte en pelage | N/25 mm | | 120 |
| Contrainte en cisaillement | MPa | EN 2243-1 | 1,5 |

En outre le temps d'application du mastic préparé selon l'exemple 5 est de 2 heures à température ambiante ou de 30 min à 150°C.

## Revendications

1. Prépolymère polythioéther comprenant des groupes fonctionnels thiols **caractérisé en ce qu'**il est susceptible d'être obtenu par la réaction :
d'au moins un composé T présentant un nombre f de fonctionnalités thiol choisi dans le groupe constitué par les fonctionnalités 2,3, 4 et 6, de préférence 3, 4 et 6,
avec au moins un composé E présentant un nombre g de fonctionnalités époxyde choisi dans le groupe constitué par les fonctionnalités 2 et 3, et **en ce que** lors de la réaction d'au moins un composé T et au moins un composé E, les composés T comprenant des groupes thiols et les composés E comprenant des groupes époxy réagissent selon un rapport nombre de groupes thiols : nombre de groupes époxy allant de 3 :1 à 4 :1.

2. Prépolymère polythioéther selon la revendication 1 **caractérisé en ce qu'**il est susceptible d'être obtenu à partir d'au moins un composé T comprenant au moins deux groupes choisis parmi les groupes suivants :
b) -(CH₂)_{nb}-SH ;
c) -(CH₂)_{nc}-O-(CH₂)_{mc}-SH ;
d) -(CH₂)_{nd}-O-(CO)-(CH₂)_{md}-SH ;
e) -(CH₂)ₙₑ-(CO)-O-(CH₂)ₘₑ-SH ;
f) -(CH₂)_{nf}-O-(CH₂CH₂O)_{lf}-(CH₂)_{mf}-SH _{;}
g) -(CH₂)_{ng}-(CO)-O-(CH₂CH₂O)_{lg}-(CH₂)_{mg}-SH ;
h) -(CH₂)ₙₕ-O-(CO)-(CH₂CH₂O)ₗₕ-(CH₂)ₘₕ-SH ;
i) -(CH₂)ₙᵢ-O-(CH₂CH₂O)ₗᵢ-(CO)-(CH₂)ₘᵢ-SH ;
j) -(CH₂)ₙⱼ-O-(CO)-(CH₂CH₂O)ₗⱼ-(CO)-(CH₂)ₘⱼ-SH ;
k) -(CH₂)ₙₖ-(CO)-O-(CH₂CH₂O)ₗₖ-(CO)-(CH₂)ₘₖ-SH ;
chacun des nb, nc, nd, ne, nf, ng, nh, ni, nj, nk étant un entier allant de 0 à 10 ; chacun des mc, md, me, mf, mg, mh, mi, mj, mk étant un entier allant de 0 à 10 ; et chacun des lf, lg, lh, li, lj, lk étant un entier allant de 0 à 6 .

3. Prépolymère polythioéther selon l'une quelconque des revendications 1 ou 2 **caractérisé en ce qu'**il est susceptible d'être obtenu à partir d'au moins un composé T de formule générale (I) : 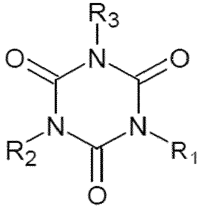 dans laquelle R₁, R₂ et R₃, identiques ou différents, sont choisis parmi les groupes suivants :
a) -C₁-₁₀ alkyle ;
b) -(CH₂)_{n1b}-SH ;
c) -(CH₂)_{n1c}-O-(CH₂)_{m1c}-SH ;
d) -(CH₂)_{n1d}-O-(CO)-(CH₂)_{m1d}-SH ;
e) -(CH₂)ₙ₁ₑ-(CO)-O-(CH₂)ₘ₁ₑ-SH ;
f) -(CH₂)_{n1f}-O-(CH₂CH₂O)_{l1f}-(CH₂)_{m1f}-SH ;
g) -(CH₂)_{n1g}-(CO)-O-(CH₂CH₂O)_{l1g}-(CH₂)_{m1g}-SH ;
h) -(CH₂)ₙ₁ₕ-O-(CO)-(CH₂CH₂O)ₗ₁ₕ-(CH₂)ₘ₁ₕ-SH ;
i) -(CH₂)ₙ₁ᵢ-O-(CH₂CH₂O)ₗ₁ᵢ-(CO)-(CH₂)ₘ₁ᵢ-SH ;
j) -(CH₂)ₙ₁ⱼ-O-(CO)-(CH₂CH₂O)ₗ₁ⱼ-(CO)-(CH₂)ₘ₁ⱼ-SH ;
k) -(CH₂)ₙ₁ₖ-(CO)-O-(CH₂CH₂O)ₗ₁ₖ-(CO)-(CH₂)ₘ₁ₖ-SH ;
avec chacun des n1b, n1c, n1d, n1e, n1f, n1g, n1h, n1i, n1j, n1k est un entier allant de 0 à 10 ; chacun des m1c, m1d, m1e, m1f, m1g, m1h, m1i, m1j, m1k est un entier allant de 0 à 10 ; et chacun des l1f, l1g, l1h, 1i, l1j, l1k un entier allant de 0 à 6; à la condition qu'au moins deux radicaux parmi les radicaux R₁, R₂ et R₃ sont choisi parmi les groupes b) à k), de préférence R₁, R₂ et R₃ sont choisis parmi les groupes b) à k), de manière préférée R₁, R₂ et R₃, identiques, sont choisis dans les groupes d) -(CH₂)_{n1d}-O-(CO)-(CH₂)_{m1d}-SH ou e) - (CH₂)ₙ₁ₑ-(CO)-O-(CH₂)ₘ₁ₑ-SH, avantageusement R₁, R₂ et R₃ sont choisis dans le groupe d) - (CH₂)_{n1d}-O-(CO)-(CH₂)_{m1d}-SH, de manière particulière ledit composé est le tris[2-(3-mercaptopropionyloxy)éthyl]isocyanurate.

4. Prépolymère polythioéther selon l'une quelconque des revendications 1 ou 2 **caractérisé en ce qu'**il est susceptible d'être obtenu à partir d'au moins un composé T de formule générale (II) : 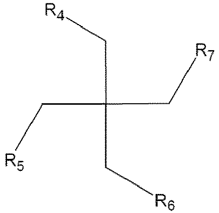 dans laquelle R₄, R₅, R₆ et R₇, identiques ou différents, sont choisis parmi les groupes suivants :
a) -C₁₋₁₀alkyle ;
b) -(CH₂)_{n2b}-SH ;
c) -(CH₂)_{n2c}-O-(CH₂)_{m2c}-SH ;
d) -(CH₂)_{n2d}-O-(CO)-(CH₂)_{m2d}-SH ;
e) -(CH₂)ₙ₂ₑ-(CO)-O-(CH₂)ₘ₂ₑ-SH ;
f) -(CH₂)_{n2f}O-(CH₂CH₂O)_{l2f}-(CH₂)_{m2f}-SH ;
g) -(CH₂)_{n2g}-(CO)-O-(CH₂CH₂O)_{l2g}-(CH₂)_{m2g}-SH ;
h) -(CH₂)ₙ₂ₕ-O-(CO)-CH₂CH₂O)ₗ₂ₕ-(CH₂)ₘ₂ₕ-SH ;
i) -(CH₂)ₙ₂ᵢ-O-(CH₂CH₂O)ₗ₂ᵢ-(CO)-(CH₂)ₘ₂ᵢ-SH ;
j) -(CH₂)ₙ₂ⱼ-O-(CO)-(CH₂CH₂O)ₗ₂ⱼ-(CO)-(CH₂)ₘ₂ⱼ-SH ;
k) -(CH₂)ₙ₂ₖ-(CO)-O-(CH₂CH₂O)ₗ₂ₖ-(CO)-(CH₂)ₘ₂ₖ-SH ;
avec chacun des n2b, n2c, n2d, n2e, n2f, n2g, n2h, n2i, n2j, n2k est un entier allant de 0 à 10 ; chacun des m2c, m2d, m2e, m2f, m2g, m2h, m2i, m2j, m2k est un entier allant de 0 à 10 ; chacun des l2f, l2g, l2h, l2i, l2j, l2k un entier allant de 0 à 6; à condition qu'au moins deux radicaux parmi les radicaux R₄, R₅, R₆ et R₇ sont choisi parmi les groupes b) à k).

5. Prépolymère polythioéther selon la revendication 4 **caractérisé en ce qu'**il est susceptible d'être obtenu à partir d'au moins un composé T de formule générale (II) dans laquelle R₄, R₅, et R₆, identiques, sont choisis dans les groupes h) -(CH₂)ₙ₂ₕ-O-(CO)- CH₂CH₂O)ₗ₂ₕ-(CH₂)ₘ₂ₕ-SH ou i) -(CH₂)ₙ₂ᵢ-O-(CH₂CH₂O)ₗ₂ᵢ-(CO)-(CH₂)ₘ₂ᵢ-SH et R₇ est choisi dans le groupe a)-C1-10 alkyle, de préférence R₄, R₅, et R₆, identiques, sont choisis dans le groupe i) - (CH₂)ₙ₂ᵢ-O-(CH₂CH₂O)ₗ₂ᵢ-(CO)-(CH₂)ₘ₂ᵢ-SH et R₇ est choisi dans le groupe a) -C₁-₁₀ alkyle, de manière particulière ledit composé est le triméthylolpropane tri(3-mercaptopropionate) et le triméthylolpropane tri(3-mercaptopropionate) éthoxylé.

6. Prépolymère polythioéther selon la revendication 4 **caractérisé en ce qu'**il est susceptible d'être obtenu à partir d'au moins un composé T de formule générale (II) dans laquelle R₄, R₅, R₆ et R₇, identiques, sont choisis dans les groupes h) -(CH₂)ₙ₂ₕ-O-(CO)- (CH₂CH₂O)ₗ₂ₕ-(CH₂)ₘ₂ₕ-SH ou i) -(CH₂)ₙ₂ᵢ-O-(CH₂CH₂O)ₗ₂ᵢ-(CO)-(CH₂)ₘ₂ᵢ-SH, de préférence dans le groupe i) -(CH₂)ₙ₂ᵢ-O-(CH₂CH₂O)ₗ₂ᵢ-(CO)-(CH₂)ₘ₂ᵢ-SH.

7. Prépolymère polythioéther selon l'une quelconque des revendications 1 ou 2 **caractérisé en ce qu'**il est susceptible d'être obtenu à partir d'au moins un composé T de formule générale (III) 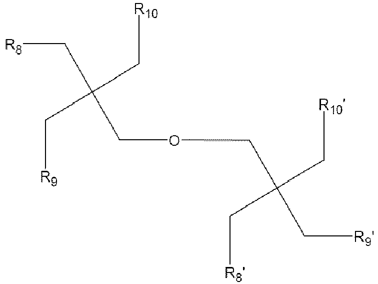 dans laquelle R₈, R₉, R₁₀, R_{8'}, R_{9'} et R_{10'}, identiques ou différents, sont choisis parmi les groupes suivants :
a) -C₁-₁₀ alkyle ;
b) -(CH₂)_{n3b}-SH ;
c) -(CH₂)_{n3c}O-(CH₂)_{m3c}SH;
d) -(CH₂)_{n3d}-O-(CO)-(CH₂)_{m3d}-SH ;
e) -(CH₂)ₙ₃ₑ-(CO)-O-(CH₂)ₘ₃ₑ-SH ;
f) -(CH₂)_{n3f}-O-(CH₂CH₂O)_{l3f}-(CH₂)_{m3f}-SH
g) -(CH₂)_{n3g}-(CO)-O-(CH₂CH₂O)_{l3g}-(CH₂)_{m3g}-SH
h) -(CH₂)ₙ₃ₕ-O-(CO)-(CH₂CH₂O)ₗ₃ₕ-(CH₂)ₘ₃ₕ-SH
i) -(CH₂)ₙ₃ᵢ-O-(CH₂CH₂O)ₗ₃ᵢ-(CO)-(CH₂)ₘ₃ᵢ-SH
j) -(CH₂)ₙ₃ⱼ-O-(CO)-(CH₂CH₂O)ₗ₃ⱼ-(CO)-(CH₂)ₘ₃ⱼ-SH
k) -(CH₂)ₙ₃ₖ-(CO)-O-(CH₂CH₂O)ₗ₃ₖ-(CO)-(CH₂)ₘ₃ₖ-SH
chacun des n3b, n3c, n3d, n3e, n3f, n3g, n3h, n3i, n3j, n3k étant un entier allant de 0 à 10 ; chacun des m3c, m3d, m3e, m3f, m3g, m3h, m3i, m3j, m3k étant un entier allant de 0 à 10 ; chacun des l3f, l3g, l3h, l3i, l3j, l3k étant un entier allant de 0 à 6; à la condition qu'au moins deux radicaux parmi les radicaux R₈, R₉, R₁₀, R_{8'}, R_{9'} et R_{10'} sont choisi parmi les groupes b) à k), de préférence les radicaux R₈, R₉, R₁₀, R_{8'}, R_{9'} et R_{10'} sont choisis parmi les groupes b) à k), de manière préférée R₈, R₉, R₁₀, R_{8'}, R_{9'} et R_{10'},identiques, sont choisis dans les groupes h) -(CH₂)ₙ₃ₕ-O-(CO)-( CH₂CH₂O)ₗ₃ₕ-(CH₂)ₘ₃ₕ-SH ou i) -(CH₂)ₙ₃ᵢ-O-( CH₂CH₂O)ₗ₃ᵢ-(CO)-(CH₂)ₘ₃ᵢ-SH, de préférence R₈, R₉, R₁₀, R_{8'}, R_{9'} et R_{10'},identiques, sont choisis dans le groupe i) -(CH₂)ₙ₂ᵢ-O-(CH₂CH₂O)ₗ₂ᵢ-(CO)-(CH₂)ₘ₂ᵢ-SH et de manière particulière le composé de formule (III) est le dipentaerythritol hexa(3-mercaptopropionate).

8. Prépolymère polythioéther selon la revendication 1 **caractérisé en ce qu'**il est susceptible d'être obtenu à partir d'au moins un composé T de formule générale (IV) HS-R₁₁-SH avec R₁₁ choisi parmi les groupes suivants :
-(CH₂)_{q}-(CO)-O-(CH₂ CH₂)-O-(CO)-(CH₂)ₛ-; -[(CH₂)_{q}-O]ᵣ-(CH₂)ₛ- et -[(CH₂)_{q}-S]ᵣ-(CH₂)ₛ-, avec q est un entier allant de 2 à 6, r est un entier allant de 1 à 5 et s est un entier allant de 2 à 10, de préférence le composé de formule (IV) est choisi dans le groupe formé par le di(3-mercaptopropionate) de glycol, le dimercaptodioxaoctane et le dimercaptodiéthylsullfure.

9. Prépolymère polythioéther selon l'une quelconque des revendications précédentes **caractérisé en ce qu'**il est susceptible d'être obtenu à partir d'au moins un composé E de formule (V) 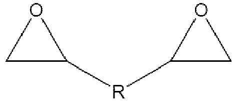 avec R est un groupe - C₁₋₆ Alk-O-R'-C₁₋₆Alk - et R' est un groupe comprenant au moins un radical choisi parmi les radicaux : -C₁₋₆ Alk ; -C₁₋₆ Alk-O- ; -C₆₋₁₀ Aryl- ; -C₆₋₁₀ Aryl-O- ; les radicaux -C₆₋₁₀ Aryl- ; -C₆₋₁₀ Aryl-O- étant non substitués ou substitués par au moins un groupement choisi parmi les -C₁₋₆ alkyle et époxyde, de préférence R' est choisi dans le groupe constitué par les groupes suivants :-(C₁₋₆ Alk -O-)ₙ- ;
- C₆₋₁₀Aryl-(C₁₋₆Alk-C₆₋₁₀Aryl-O-)ₙ- ; -
- C₆₋₁₀Aryl-(C₁₋₆Alk-C₆₋₁₀Aryl-)ₙ- ;
- C₆₋₁₀ Aryl - C₁₋₆ Alk - C₆₋₁₀ Aryl-substitué époxy - C₁₋₆ Alk - C₆₋₁₀ Aryl- ;
avec n étant compris entre 0 et 5.

10. Prépolymère selon la revendication précédente susceptible d'être obtenu à partir d'un composé E correspondant à la formule (VI) 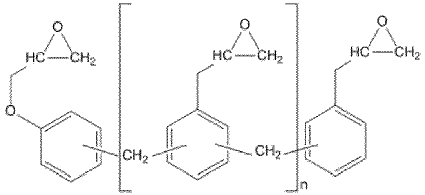 dans laquelle n va de 0 à 1.

11. Prépolymère polythioéther selon la revendication 1 caractérisé en qu'il est susceptible d'être obtenu par la réaction :
d'au moins un composé T choisi dans le groupe formé par le tris[2-(3-mercaptopropionyloxy)éthyl]isocyanurate, le triméthylolpropane tri(3-mercaptopropionate), le triméthylolpropane tri(3-mercaptopropionate) éthoxylé, le dipentaerythritol hexa(3-mercaptopropionate), le di(3-mercaptopropionate) de glycol, le dimercaptodioxaoctane et le dimercaptodiéthylsullfure,
avec au moins un composé E choisi dans le groupe formé par qui le diglycidyl éther de bisphenol A et le diglycidyl éther de bisphenol F.

12. Procédé de préparation du prépolymère polythioéther selon l'une quelconque des revendications précédentes **caractérisé en ce qu'**il comprend au moins les étapes suivantes :
- disposer d'au moins un composé T présentant un nombre f de fonctionnalités thiol choisi dans le groupe constitué par les fonctionnalités 2 ,3, 4 et 6 ;
- ajouter audit composé T au moins un composé E présentant un nombre g de fonctionnalités époxyde choisi dans le groupe constitué par les fonctionnalités 2 ou 3, en une quantité telle que le rapport nombre de groupes thiols : nombre de groupes époxydes va de 3 :1 à 4 :1
- ajouter un catalyseur avant et/ou après l'ajout dudit composé E,
- agiter le mélange réactionnel comprenant les composé(s) E et composé(s) T et le catalyseur,
- récupérer le prépolymère polythioéther obtenu.

13. Composition comprenant au moins un prépolymère polythioéther selon l'une quelconque des revendications 1 à 11 ou préparé suivant le procédé de préparation selon la revendication 12 ledit prépolymère polythioéther ayant une fonctionnalité choisie parmi les fonctionnalités 2,3, 4, 5 et 6 et un oligomère choisi parmi les oligomères modifiés (méth)acrylate et les oligomères contenant des groupements époxydes, la somme des fonctionnalités du prépolymère polythioéther et de l' oligomère étant supérieure à 4.

14. Composition selon l'une quelconque la revendication 13 **caractérisée en ce qu'**elle comprend au moins une charge choisie parmi les charges organiques et les charges inorganiques, de préférence pour son utilisation en tant qu'enduit d'étanchéité ou mastic.

## Patentansprüche

1. Polythioether-Prepolymer, das funktionelle Thiolgruppen umfasst, **dadurch gekennzeichnet, dass** es gewonnen werden kann durch die Reaktion:
wenigstens einer Verbindung T, die eine Anzahl f von Thiol-Funktionalitäten aufweist, die aus der Gruppe ausgewählt ist, die aus den Funktionalitäten 2, 3, 4 und 6 besteht, vorzugsweise 3, 4 und 6,
mit wenigstens einer Verbindung E, die eine Anzahl g von Epoxid-Funktionalitäten aufweist, die aus der Gruppe ausgewählt ist, die aus den Funktionalitäten 2 und 3 besteht, und dass bei der Reaktion von wenigstens einer Verbindung T und wenigstens einer Verbindung E die Verbindungen T, die Thiolgruppen umfassen, und die Verbindungen E, die Epoxidgruppen umfassen, in einem Verhältnis Anzahl Thiolgruppen : Anzahl Epoxidgruppen von 3:1 bis 4:1 reagieren.

2. Polythioether-Prepolymer nach Anspruch 1, **dadurch gekennzeichnet, dass** es aus wenigstens einer Verbindung T gewonnen werden kann, die wenigstens zwei Gruppen umfasst, die aus den folgenden Gruppen ausgewählt sind:
b) -(CH₂)_{nb}-SH;
c) -(CH₂)_{nc}-O-(CH₂)_{mc}-SH;
d) -(CH₂)_{nd}-O-(CO)-(CH₂)_{md}-SH;
e) -(CH₂)ₙₑ-(CO)-O-(CH₂)ₘₑ-SH;
f) -(CH₂)_{nf}-O-(CH₂CH₂O)_{lf}-(CH₂)_{mf}-SH;
g) -(CH₂)_{ng}-(CO)-O-(CH₂CH₂O)_{lg}-(CH₂)_{mg}-SH;
h) -(CH₂)ₙₕ-O-(CO)-(CH₂CH₂O)ₗₕ-(CH₂)ₘₕ-SH;
i) -(CH₂)ₙᵢ-O-(CH₂CH₂O)ₗᵢ-(CO)-(CH₂)ₘᵢ-SH;
j) -(CH₂)ₙⱼ-O-(CO)-(CH₂CH₂O)ₗⱼ-(CO)-(CH₂)ₘⱼ-SH;
k) -(CH₂)ₙₖ-(CO)-O-(CH₂CH₂O)ₗₖ-(CO)-(CH₂)ₘₖ-SH;
wobei jede der nb, nc, nd, ne, nf, ng, nh, ni, nj, nk eine Ganzzahl von 0 bis 10 ist; jede der mc, md, me, mf, mg, mh, mi, mj, mk eine Ganzzahl von 0 bis 10 ist; und jede der lf, lg, lh, li, lj, lk eine Ganzzahl von 0 bis 6 ist.

3. Polythioether-Prepolymer nach einem der Ansprüche 1 oder 2, **dadurch gekennzeichnet, dass** es aus wenigstens einer Verbindung T der allgemeinen Formel (I) gewonnen werden kann: 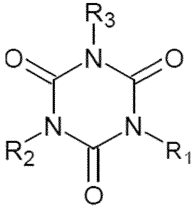 wobei R₁, R₂ und R₃, gleich oder unterschiedlich, aus folgenden Gruppen ausgewählt werden:
a) -C₁₋₁₀Alkyl;
b) -(CH₂)_{n1b}-SH;
c) -(CH₂)_{n1c}-O-(CH₂)_{m1c}-SH;
d) -(CH₂)_{n1d}-O-(CO)-(CH₂)_{m1d}-SH;
e) -(CH₂)ₙ₁ₑ-(CO)-O-(CH₂)ₘ₁ₑ-SH;
f) -(CH₂)_{n1f}-O-(CH₂CH₂O)_{l1f}-(CH₂)_{m1f}-SH;
g) -(CH₂)_{n1g}-(CO)-O-(CH₂CH₂O)_{l1g}-(CH₂)_{m1g}-SH;
h) -(CH₂)ₙ₁ₕ-O-(CO)-(CH₂CH₂O)ₗ₁ₕ-(CH₂)ₘ₁ₕ-SH;
i) -(CH₂)ₙ₁ᵢ-O-(CH₂CH₂O)ₗ₁ᵢ-(CO)-(CH₂)ₘ₁ᵢ-SH;
j) -(CH₂)ₙ₁ⱼ-O-(CO)-(CH₂CH₂O)ₗ₁ⱼ-(CO)-(CH₂)ₘ₁ⱼ-SH;
k) -(CH₂)ₙ₁ₖ-(CO)-O-(CH₂CH₂O)ₗ₁ₖ-(CO)-(CH₂)ₘ₁ₖ-SH;
wobei jede der n1b, n1c, n1d, n1e, n1f, n1g, n1h, n1i, n1j, n1k eine Ganzzahl von 0 bis 10 ist; jede der m1c, m1d, m1e, m1f, m1g, m1h, m1i, m1j, m1k eine Ganzzahl von 0 bis 10 ist; und jede der l1f, l1g, l1h, l1i, l1j, l1k eine Ganzzahl von 0 bis 6 ist; vorausgesetzt, dass wenigstens zwei der Radikale R₁, R₂ und R₃ aus den Gruppen b) bis k) ausgewählt sind, vorzugsweise R₁, R₂ und R₃ aus den Gruppen b) bis k) ausgewählt sind, vorzugsweise R₁, R₂ und R₃, identisch, aus den Gruppen d) -(CH₂)_{n1d}-O-(CO)-(CH₂)_{m1d}-SH oder e) - (CH₂)ₙ₁ₑ-(CO)-O-(CH₂)ₘ₁ₑ-SH ausgewählt sind, vorteilhafterweise sind R₁, R₂ und R₃ aus der Gruppe d) - (CH₂)_{n1d}-O-(CO)-(CH₂)_{m1d}-SH ausgewählt, insbesondere ist die besagte Verbindung Tris[2-(3-mercaptopropionyloxy)ethyl]isocyanurat.

4. Polythioether-Prepolymer nach einem der Ansprüche 1 oder 2, **dadurch gekennzeichnet, dass** es aus wenigstens einer Verbindung T der allgemeinen Formel (II) gewonnen werden kann: 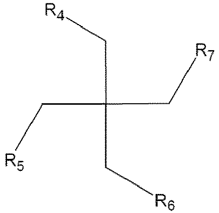 wobei R₄, R₅, R₆ und R₇, gleich oder unterschiedlich, aus folgenden Gruppen ausgewählt werden:
a) -C₁₋₁₀Alkyl;
b) -(CH₂)_{n2b}-SH;
c) -(CH₂)_{n2c}-O-(CH₂)_{m2c}-SH;
d) -(CH₂)_{n2d}-O-(CO)-(CH₂)_{m2d}-SH;
e) -(CH₂)ₙ₂ₑ-(CO)-O-(CH₂)ₘ₂ₑ-SH;
f) -(CH₂)_{n2f}O-(CH₂CH₂O)_{l2f}-(CH₂)_{m2f}-SH;
g) -(CH₂)_{n2g}-(CO)-O-(CH₂CH₂O)_{l2g}-(CH₂)_{m2g}-SH;
h) -(CH₂)ₙ₂ₕ-O-(CO)-CH₂CH₂O)ₗ₂ₕ-(CH₂)ₘ₂ₕ-SH;
i) -(CH₂)ₙ₂ᵢ-O-(CH₂CH₂O)ₗ₂ᵢ-(CO)-(CH₂)ₘ₂ᵢ-SH;
j) -(CH₂)ₙ₂ⱼ-O-(CO)-(CH₂CH₂O)ₗ₂ⱼ-(CO)-(CH₂)ₘ₂ⱼ-SH;
k) -(CH₂)ₙ₂ₖ-(CO)-O-(CH₂CH₂O)ₗ₂ₖ-(CO)-(CH₂)ₘ₂ₖ-SH;
wobei jede der n2b, n2c, n2d, n2e, n2f, n2g, n2h, n2i, n2j, n2k eine Ganzzahl von 0 bis 10 ist; jede der m2c, m2d, m2e, m2f, m2g, m2h, m2i, m2j, m2k eine Ganzzahl von 0 bis 10 ist; jede der l2f, l2g, l2h, l2i, l2j, l2k eine Ganzzahl von 0 bis 6 ist; vorausgesetzt, dass wenigstens zwei der Radikale R₄, R₅, R₆ und R₇ aus den Gruppen b) bis k) ausgewählt sind.

5. Polythioether-Prepolymer nach Anspruch 4, **dadurch gekennzeichnet, dass** es aus wenigstens einer Verbindung T der allgemeinen Formel (II) gewonnen werden kann, wobei R₄, R₅ und R₆, identisch, aus den Gruppen h) -(CH₂)ₙ₂ₕ-O-(CO)- CH₂CH₂O)ₗ₂ₕ-(CH₂)ₘ₂ₕ-SH oder i) -(CH₂)ₙ₂ᵢ-O-(CH₂CH₂O)ₗ₂ᵢ-(CO)-(CH₂)ₘ₂ᵢ-SH ausgewählt sind und R₇ aus der Gruppe a)-C1-10 Alkyl ausgewählt ist, R₄, R₅ und R₆, identisch, vorzugsweise aus der Gruppe i) - (CH₂)ₙ₂ᵢ-O-(CH₂CH₂O)ₗ₂ᵢ-(CO)-(CH₂)ₘ₂ᵢ-SH ausgewählt sind und R₇ aus der Gruppe a) -C₁₋₁₀ Alkyl ausgewählt ist, insbesondere ist die besagte Verbindung Trimethylolpropan tri(3-mercaptopropionat) und Trimethylolpropan tri(3-mercaptopropionat) ethoxyliert.

6. Polythioether-Prepolymer nach Anspruch 4, **dadurch gekennzeichnet, dass** es aus wenigstens einer Verbindung T der allgemeinen Formel (II) gewonnen werden kann, wobei R₄, R₅, R₆ und R₇, identisch, in den Gruppen h) -(CH₂)ₙ₂h-O-(CO)- (CH₂CH₂O)I₂h-(CH₂)ₘ₂ₕ-SH oder i) -(CH₂)ₙ₂i-O-(CH₂CH₂O)l₂i-(CO)-(CH₂)ₘ₂i-SH ausgewählt sind, vorzugsweise in der Gruppe i) -(CH₂)ₙ₂ᵢ-O-(CH₂CH₂O)I₂ᵢ-(CO)-(CH₂)ₘ₂ᵢ-SH.

7. Polythioether-Prepolymer nach einem der Ansprüche 1 oder 2, **dadurch gekennzeichnet, dass** es aus wenigstens einer Verbindung T der allgemeinen Formel (III) gewonnen werden kann 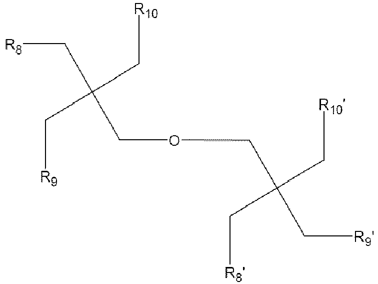 wobei R₈, R₉, R₁₀, R_{8'}, R_{9'} und R_{10'}, gleich oder unterschiedlich, aus folgenden Gruppen ausgewählt werden:
a) -C₁₋₁₀Alkyl;
b) -(CH₂)_{n3b}-SH;
c) -(CH₂)_{n3c}-O-(CH₂)_{m3c}-SH;
d) -(CH₂)_{n3d}-O-(CO)-(CH₂)_{m3d}-SH;
e) -(CH₂)ₙ₃ₑ-(CO)-O-(CH₂)ₘ₃ₑ-SH;
f) -(CH₂)_{n3f}-O-(CH₂CH₂O)_{l3f}-(CH₂)_{m3f}-SH
g) -(CH₂)_{n3g}-(CO)-O-(CH₂CH₂O)_{l3g}-(CH₂)_{m3g}-SH
h) -(CH₂)ₙ₃ₕ-O-(CO)-(CH₂CH₂O)ₗ₃ₕ-(CH₂)ₘ₃ₕ-SH
i) -(CH₂)ₙ₃ᵢ-O-(CH₂CH₂O)ₗ₃ᵢ-(CO)-(CH₂)ₘ₃ᵢ-SH
j) -(CH₂)ₙ₃ⱼ-O-(CO)-(CH₂CH₂O)ₗ₃ⱼ-(CO)-(CH₂)ₘ₃ⱼ-SH
k) -(CH₂)ₙ₃ₖ-(CO)-O-(CH₂CH₂O)ₗ₃ₖ-(CO)-(CH₂)ₘ₃ₖ-SH
wobei jede der n3b, n3c, n3d, n3e, n3f, n3g, n3h, n3i, n3j, n3k eine Ganzzahl von 0 bis 10 ist; jede der m3c, m3d, m3e, m3f, m3g, m3h, m3i, m3j, m3k eine Ganzzahl von 0 bis 10 ist; jede der l3f, l3g, l3h, l3i, l3j, l3k eine Ganzzahl von 0 bis 6 ist; vorausgesetzt, dass wenigstens zwei der Radikale R₈, R₉, R₁₀, R _{8'}, R _{9'} und R _{10'} aus den Gruppen b) bis k) ausgewählt sind, vorzugsweise die Radikale R₈, R₉, R₁₀, R _{8'}, R _{9'} und R _{10'} aus den Gruppen b) bis k) ausgewählt sind, vorzugsweise R₈, R₉, R₁₀, R _{8'}, R _{9'} und R _{10'} ,identisch, aus den Gruppen h) -(CH₂)ₙ₃ₕ-O-(CO)-(CH₂CH₂O)ₗ₃ₕ-(CH₂)ₘ₃ₕ-SH oder i) - (CH₂)ₙ₃ᵢ-O-(CH₂CH₂O)ₗ₃ᵢ-(CO)-(CH₂)ₘ₃ᵢ-SH ausgewählt sind, vorzugsweise R₈, R₉, R₁₀, R _{8'}, R _{9'} und R _{10'} identisch, aus der Gruppe i) -(CH₂)ₙ₂ᵢ-O-(CH₂CH₂O)ₗ₂ᵢ-(CO)-(CH₂)ₘ₂ᵢ-SH ausgewählt sind und insbesondere ist die Verbindung der Formel (III) Dipentaerythritol hexa(3-Mercaptopropionat).

8. Polythioether-Prepolymer nach Anspruch 1, **dadurch gekennzeichnet, dass** es aus wenigstens einer Verbindung T der allgemeinen Formel (IV) gewonnen werden kann HS-R₁₁-SH mit R₁₁ ausgewählt aus folgenden Gruppen: -(CH₂)_{q}-(CO)-O-(CH₂ CH₂)-O-(CO)-(CH₂)ₛ-; -[(CH₂)_{q}-O]ᵣ-(CH₂)ₛ- und -[(CH₂)_{q}-S]ᵣ-(CH₂)ₛ-, wobei q eine Ganzzahl von 2 bis 6, r eine Ganzzahl von 1 bis 5 und s eine Ganzzahl von 2 bis 10 ist, vorzugsweise wird die Formelverbindung (IV) aus der Gruppe ausgewählt, die aus Glykoldi(3-Mercaptopropionat), Dimercaptodioxaoctan und Dimercaptodiethylsulfid besteht.

9. Polythioether-Prepolymer nach einem der vorhergehenden Ansprüche, **dadurch gekennzeichnet, dass** es aus wenigstens einer Verbindung E der Formel (V) gewonnen werden kann 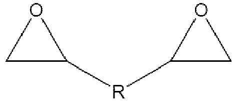
wobei R eine Gruppe - C ₁₋₆A1k-O-R'-C₁₋₆Alk - ist und R' eine Gruppe ist, die wenigstens ein Radikal umfasst, das aus den Radikalen: -C₁₋₆Alk; -C₁₋₆Alk-O-; -C₆₋₁₀ Aryl-; -C₆₋₁₀Aryl-O-; ausgewählt ist, wobei die Radikale -C₆₋₁₀ Aryl-; -C₆₋₁₀Aryl-O- nicht substituiert sind oder durch wenigstens eine Gruppe substituiert sind, die unter -C₁₋₆ Alkyl und Epoxid ausgewählt ist, vorzugsweise wird R' aus der Gruppe ausgewählt, die aus den folgenden Gruppen besteht :-(C₁₋₆Alk -O-)ₙ-;
- C₆₋₁₀Aryl-(C₁₋₆Alk-C₆₋₁₀Aryl-O-)ₙ-;-
- C₆₋₁₀Aryl-(C₁₋₆Alk-C₆₋₁₀Aryl-)ₙ-;
- C₆₋₁₀Aryl - C₁₋₆Alk - C₆₋₁₀Aryl-substituiertes Epoxid - C₁₋₆Alk - C₆₋₁₀Aryl-;
wobei n zwischen 0 und 5 liegt.

10. Präpolymer nach dem vorhergehenden Anspruch, das aus einer Verbindung E erhalten werden kann, die der Formel entspricht (VI) 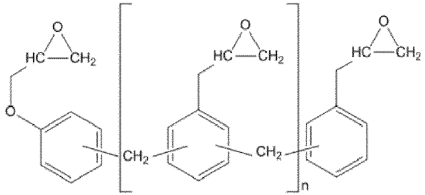 wobei n von 0 bis 1 geht.

11. Polythioether-Prepolymer nach Anspruch 1, **dadurch gekennzeichnet, dass** es gewonnen werden kann durch die Reaktion:
wenigstens einer Verbindung T, ausgewählt aus der Gruppe, die aus Tris[2-(3-Mercaptopropionyloxy)ethyl]isocyanurat, Trimethylolpropan tri(3-mercaptopropionat), trimethylolpropan tri(3-mercaptopropionat) ethoxyliert, Dipentaerythritol hexa(3-mercaptopropionat), Glykoldi(3-mercaptopropionat), Dimercaptodioxaoctan und Dimercaptodiethylsulfid besteht,
mit wenigstens einer Verbindung E, die aus der Gruppe ausgewählt ist, die aus Bisphenoldiglycidylether A und Bisphenoldiglycidylether F besteht.

12. Verfahren zur Vorbereitung des Polythioether-Prepolymers nach einem der vorhergehenden Ansprüche, **dadurch gekennzeichnet, dass** es wenigstens die folgenden Schritte umfasst:
- über wenigstens eine Verbindung T verfügen, die eine Anzahl f von Thiol-Funktionalitäten aufweist, die aus der Gruppe ausgewählt ist, die aus den Funktionalitäten 2, 3, 4 und 6 besteht;
- zur besagten Verbindung T wenigstens eine Verbindung E hinzufügen, die eine Anzahl g von Epoxid-Funktionalitäten aufweist, die aus der Gruppe ausgewählt ist, die aus den Funktionalitäten 2 oder 3 besteht, in einer Menge, die so groß ist, dass das Verhältnis Anzahl der Thiolgruppen : Anzahl der Epoxidgruppen 3:1 bis 4:1 beträgt,
- Einen Katalysator vor und/oder nach der Zugabe der Verbindung E hinzufügen, Das Reaktionsgemisch, das die Verbindung(en) E und Verbindung(en) T und den Katalysator umfasst, rühren,
- das gewonnene Polythioether-Prepolymer auffangen.

13. Zusammensetzung, die wenigstens ein Polythioether-Prepolymer nach einem der Ansprüche 1 bis 11 umfasst oder gemäß dem Vorbereitungsverfahren nach Anspruch 12 zubereitet ist, wobei das Polythioether-Prepolymer eine Funktionalität hat, die aus den Funktionalitäten 2, 3, 4, 5 und 6 ausgewählt ist, und ein Oligomer, das aus modifizierten (Methacrylat-)Oligomeren und Oligomeren ausgewählt ist, die EpoxidGruppen enthalten, wobei die Summe der Funktionalitäten des Polythioether-Prepolymers und des Oligomers größer als 4 ist.

14. Zusammensetzung nach einem der Ansprüche 13, **dadurch gekennzeichnet, dass** sie wenigstens einen Füllstoff umfasst, der unter organischen Füllstoffen und anorganischen Füllstoffen ausgewählt ist, vorzugsweise zur Verwendung als Dichtstoff oder Spachtelmasse.

## Claims

1. A polythioether prepolymer comprising thiol functional groups, wherein the polythioether prepolymer is obtainable by the reaction:
of at least one compound T having a number f of thiol functional groups selected from 2, 3, 4 and 6, preferably 3, 4 and 6, with at least one compound E having a number g of epoxy functional groups selected from 2 and 3 and wherein during the reaction of at least one compound T and at least one compound E, the compounds T comprising thiol groups and the compounds E comprising the epoxy groups react according to a ratio number of thiol groups: number of epoxy groups from 3:1 to 4:1.

2. The polythioether prepolymer according to claim 1, wherein the polythioether prepolymer is obtainable from at least one compound T comprising at least two groups selected from the group consisting of:
b) -(CH₂)_{nb}-SH;
c) -(CH₂)_{nc}-O-(CH₂)_{mc}-SH_{;}
d) -(CH₂)_{nd}-O-(CO)-(CH₂)_{md}-SH_{;}
e) -(CH₂)ₙₑ-(CO)-O-(CH₂)ₘₑ-SH;
f) -(CH₂)_{nf}-O-(CH₂CH₂O)_{lf}-(CH₂)_{mf}-SH_{;}
g) -(CH₂)_{ng}-(CO)-O-(CH₂CH₂O)_{lg}-(CH₂)_{mg}-SH;
h) -(CH₂)ₙₕ-O-(CO)-(CH₂CH₂O)ₗₕ-(CH₂)ₘₕ-SH;
i) -(CH₂)ₙᵢ-O-(CH₂CH₂O)ₗᵢ-(CO)-(CH₂)ₘᵢ-SH;
j) -(CH₂)ₙⱼ-O-(CO)-(CH₂CH₂O)ₗⱼ-(CO)-(CH₂)ₘⱼ-SH; and
k) -(CH₂)ₙₖ-(CO)-O-(CH₂CH₂O)ₗₖ-(CO)-(CH₂)ₘₖ-SH;
each of nb, nc, nd, ne, nf, ng, nh, ni, nj, nk being an integer ranging from 0 to 10; each of mc, md, me, mf, mg, mh, mi, mj, mk being an integer ranging from 0 to 10; and each of lf, lg, lh, li, lj, lk being an integer ranging from 0 to 6 .

3. The polythioether prepolymer according to claim 1 or 2, wherein the polythioether prepolymer is obtainable from at least one compound T of general formula (I): 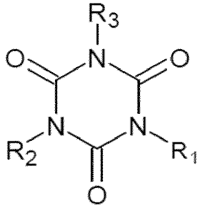 in which R₁, R₂ and R₃, identical or different, are selected from the group consisting of:
a) -C₁-₁₀alkyl;
b) -(CH₂)_{n1b}-SH;
c) -(CH₂)_{n1c}-O-(CH₂)_{m1c}-SH_{;}
d) -(CH₂)_{n1d}-O-(CO)-(CH₂)_{m1d}-SH_{;}
e) -(CH₂)ₙ₁ₑ-(CO)-O-(CH₂)ₘ₁ₑ-SH;
f) -(CH₂)_{n1f}-O-(CH₂CH₂O)_{l1f}-(CH₂)_{m1f}-SH;
g) -(CH₂)_{n1g}-(CO)-O-(CH₂CH₂O)_{l1g}-(CH₂)_{m1g}-SH;
h) -(CH₂)ₙ₁ₕ-O-(CO)-(CH₂CH₂O)ₗ₁ₕ-(CH₂)ₘ₁ₕ-SH;
i) -(CH₂)ₙ₁ᵢ-O-(CH₂CH₂O)ₗ₁ᵢ-(CO)-(CH₂)ₘ₁ᵢ-SH;
j) -(CH₂)ₙ₁ⱼ-O-(CO)-(CH₂CH₂O)ₗ₁ⱼ-(CO)-(CH₂)ₘ₁ⱼ-SH; and
k) -(CH₂)ₙ₁ₖ-(CO)-O-(CH₂CH₂O)ₗ₁ₖ-(CO)-(CH₂)ₘ₁ₖ-SH;
with each of n1b, n1c, n1d, n1e, n1f, n1g, n1h, n1i, n1j, n1k is an integer ranging from 0 to 10; each of m1c, m1d, m1e, m1f, m1g, m1h, m1i, m1j, m1k is an integer ranging from 0 to 10; and each of l1f, l1g, l1h, l1i, l1j, l1k an integer ranging from 0 to 6; provided that at least two radicals from the radicals R₁, R₂ and R₃ are chosen from groups b) to k), preferably R₁, R₂ and R₃ are chosen from groups b) to k), in a preferred manner R₁, R₂ and R₃, identical, are chosen from groups d) -(CH₂)_{n1d}-O-(CO)-(CH₂)_{m1d}-SH or e) -(CH₂)ₙ₁ₑ-(CO)-O-(CH₂)ₘ₁ₑ-SH; advantageously R₁, R₂ and R₃ are chosen in the group d) -(CH₂)_{n1d}-O-(CO)-(CH₂)_{m1d}-SH and particularly said compound is the tris[2-(3-mercaptopropionyloxy)ethyl]isocyanurate.

4. The polythioether prepolymer according to claim 1 or 2, wherein the polythioether prepolymer is obtainable from at least one compound T of general formula (II): 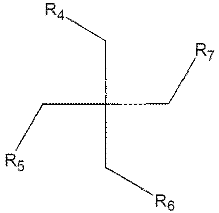 in which R₄, R₅, R₆ and R₇, identical or different, selected from the group consisting of:
a) -C₁-₁₀alkyl;
b) -(CH₂)_{n2b}-SH;
c) -(CH₂)_{n2c}-O-(CH₂)_{m2c}-SH_{;}
d) -(CH₂)_{n2d}-O-(CO)-(CH₂)_{m2d}-SH_{;}
e) -(CH₂)ₙ₂ₑ-(CO)-O-(CH₂)ₘ₂ₑ-SH;
f) -(CH₂)_{n2f}O-(CH₂CH₂O)_{l2f}-(CH₂)_{m2f}-SH;
g) -(CH₂)_{n2g}-(CO)-O-(CH₂CH₂O)_{l2g}-(CH₂)_{m2g}-SH;
h) -(CH₂)ₙ₂ₕ-O-(CO)-CH₂CH₂O)ₗ₂ₕ-(CH₂)ₘ₂ₕ-SH;
i) -(CH₂)ₙ₂ᵢ-O-(CH₂CH₂O)ₗ₂ᵢ-(CO)-(CH₂)ₘ₂ᵢ-SH;
j) -(CH₂)ₙ₂ⱼ-O-(CO)-(CH₂CH₂O)ₗ₂ⱼ-(CO)-(CH₂)ₘ₂ⱼ-SH; and
k) -(CH₂)ₙ₂ₖ-(CO)-O-(CH₂CH₂O)ₗ₂ₖ-(CO)-(CH₂)ₘ₂ₖ-SH;
with each of n2b, n2c, n2d, n2e, n2f, n2g, n2h, n2i, n2j, n2k being an integer ranging from 0 to 10; each of m2c, m2d, m2e, m2f, m2g, m2h, m2i, m2j, m2k being an integer ranging from 0 to 10; each of l2f, l2g, l2h, l2i, l2j, l2k being an integer ranging from 0 to 6; with the proviso that at least two radicals from the radicals R₄, R₅, R₆ and R₇ are chosen from groups b) to k).

5. The polythioether prepolymer according to claim 4, wherein the polythioether prepolymer is obtainable from at least one compound T of general formula (II) in which R₄, R₅ and R₆, which are identical, are chosen from groups h) - (CH₂)ₙ₂ₕ-O-(CO)-(CH₂CH₂O)ₗ₂ₕ-(CH₂)ₘ₂ₕ-SH or i) -(CH₂)ₙ₂ᵢ-O-(CH₂CH₂O)ₗ₂ᵢ -(CO)-(CH₂)ₘ₂ᵢ-SH and R₇ is chosen from the group a)-C1-10 alkyl, preferably R₄, R₅ and R₆, which are identical, are chosen in group i) - (CH₂)ₙ₂ᵢ -O- (CH₂ CH₂ O) ₗ₂ᵢ - (CO) - (CH₂) ₘ₂ᵢ -SH and R₇ is chosen in group a) -C₁-₁₀ alkyl ; particularly said compound is trimethylolpropane tri (3-mercaptopropionate) and trimethylolpropane tri (3-mercaptopropionate) ethoxylated.

6. The polythioether prepolymer according to claim 4, wherein the polythioether prepolymer is obtainable from at least one compound T with general formula (II) in which R₄, R₅, R₆ and R₇, which are identical, are chosen from the groups h) -(CH₂)ₙ₂ₕ-O-(CO) - (CH₂CH₂O)ₗ₂ₕ-(CH₂)ₘ₂ₕ-SH or i) -(CH₂)ₙ₂ᵢ-O-(CH₂CH₂O)ₗ₂ᵢ-(CO)-(CH₂)ₘ₂ᵢ-SH, preferably in group or i) -(CH₂)ₙ₂ᵢ-O-(CH₂CH₂O)ₗ₂ᵢ-(CO)-(CH₂)ₘ₂ᵢ-SH.

7. The polythioether prepolymer according to claim 1 or 2, wherein the polythioether prepolymer is obtainable from at least one compound T of general formula (III) 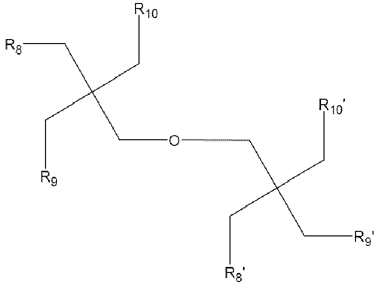 in which R₈, R₉, R₁₀, R_{8'}, R_{9'} and R_{10'},identical or different, are selected from the group consisting of:
a) -C₁-₁₀alkyl;
b) -(CH₂)_{n3b}-SH;
c) -(CH₂)_{n3c}-O-(CH₂)_{m3c}-SH_{;}
d) -(CH₂)_{n3d}-O-(CO)-(CH₂)_{m3d}-SH_{;}
e) -(CH₂)ₙ₃ₑ-(CO)-O-(CH₂)ₘ₃ₑ-SH;
f) -(CH₂)_{n3f}-O-(CH₂CH₂O)_{l3f}-(CH₂)_{m3f}-SH;
g) -(CH₂)_{n3g}-(CO)-O-(CH₂CH₂O)_{l3g}-(CH₂)_{m3g}-SH;
h) -(CH₂)ₙ₃ₕ-O-(CO)-(CH₂CH₂O)ₗ₃ₕ-(CH₂)ₘ₃ₕ-SH;
i) -(CH₂)ₙ₃ᵢ-O-(CH₂CH₂O)ₗ₃ᵢ-(CO)-(CH₂)ₘ₃ᵢ-SH ;
j) -(CH₂)ₙ₃ⱼ-O-(CO)-(CH₂CH₂O)ₗ₃ⱼ-(CO)-(CH₂)ₘ₃ⱼ-SH ; and
k) -(CH₂)ₙ₃ₖ-(CO)-O-(CH₂CH₂O)ₗ₃ₖ-(CO)-(CH₂)ₘ₃ₖ-SH
with each of n3b, n3c, n3d, n3e, n3f, n3g, n3h, n3i, n3j, n3k is an integer ranging from 0 to 10; each of m3c, m3d, m3e, m3f, m3g, m3h, m3i, m3j, m3k is an integer ranging from 0 to 10; and each of l3f, l3g, l3h, l3i, l3j, l3k is an integer ranging from 0 to 6; provided that at least two radicals from the radicals R₈, R₉, R₁₀, R_{8'}, R_{9'} and R_{10'} are chosen from groups b) to k) ; preferably R₈, R₉, R₁₀, R_{8'}, R_{9'} and R_{10'} are chosen from groups b) to k), in a preferred manner R₈, R₉, R₁₀, R_{8'}, R_{9'} and R_{10'} ,which are identical, are chosen from groups h) -(CH₂)ₙ₃ₕ-O-(CO)-(CH₂CH₂O)ₗ₃ₕ-(CH₂)ₘ₃ₕ-SH or i) -(CH₂)ₙ₃ᵢ-O-(CH₂CH₂O)ₗ₃ᵢ-(CO)-(CH₂)ₘ₃ᵢ-SH ; preferably Rs, R₉, R₁₀, R_{8'}, R_{9'} and R_{10'} ,which are identical, are chosen in group i) -(CH₂)ₙ₃ᵢ-O-(CH₂CH₂O)ₗ₃ᵢ-(CO)-(CH₂)ₘ₃ᵢ-SH and particularly the compound of formula (III) is dipentaerythritol hexa (3-mercaptopropionate).

8. The polythioether prepolymer according to claim 1, wherein the polythioether prepolymer is obtainable from at least one compound T of general formula (IV) HS-Rn-SH with R₁₁ chosen from the following groups: -(CH₂)_{q}-(CO)-O-(CH₂CH₂)-O-(CO)-(CH₂)ₛ- or -[(CH₂)_{q}-O]ᵣ-(CH₂)ₛ-and-[(CH₂)_{q}-S]ᵣ-(CH₂)ₛ-, with q is an integer ranging from 2 to 6, r is an integer ranging from 1 to 5 and s is an integer ranging from 2 to 10, preferably the compound of formula (IV) is chosen from di (3-mercaptopropionate) of glycol, dimercaptodioxaoctane and dimercaptodiethylsulfide.

9. The polythioether prepolymer according to anyone of the preceding claims,
wherein the polythioether prepolymer is obtainable from at least one compound E of formula (V) 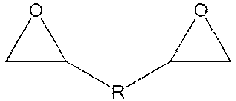 with R is a group - C₁₋₆ Alk-O-R'-C₁₋₆ Alk - and R' is a group comprising at least one radical chosen from radicals: -C₁₋₆ Alk; -C₁₋₆ Alk-O-; -C₆₋₁₀ Aryl-; and -C₆₋₁₀ Aryl-O-; radicals -C₆₋₁₀ Aryl- and -C₆₋₁₀ Aryl-O- being unsubstituted or substituted by at least one group chosen from -C₁₋₆ alkyl and epoxide, preferably
R' is chosen from the group consisting of the following groups:
- (C₁₋₆ Alk -O-)ₙ-;
-C₆₋₁₀ Aryl - (C₁₋₆ Alk - C₆₋₁₀ Aryl-O-)ₙ-;
-C₆₋₁₀ Aryl - (C₁₋₆ Alk- C₆₋₁₀ Aryl-)ₙ-;
- C₆₋₁₀ Aryl - C₁₋₆ Alk - C₆₋₁₀ Aryl-substituted epoxy - C₁₋₆ Alk - C₆₋₁₀ Aryl-;
with n being between 0 and 5.

10. The polythioether prepolymer according to the preceding claim, obtainable from a compound E corresponding to formula (VI) 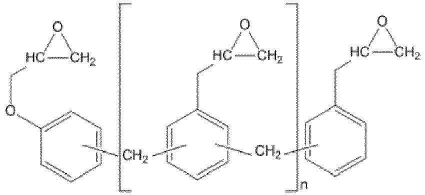 where n ranges from 0 to 1.

11. The polythioether prepolymer according to claim 1, wherein the polythioether prepolymer is obtainable by the reaction:
of at least one compound T selected from the group consisting of tris[2-(3-mercaptopropionyloxy)ethyl] isocyanurate, trimethylolpropane tri(3-mercaptopropionate), ethoxylated trimethylolpropane tri(3-mercaptopropionate), dipentaerythritol hexa(3-mercaptopropionate), di(3-mercaptopropionate) glycol, dimercaptodioxaoctane and dimercapto diethyl sulfur, with at least one compound E selected from bisphenol A diglycidyl ether and bisphenol F diglycidyl ether.

12. A method for preparing the polythioether prepolymer according to anyone of the preceding claims, comprising at least the following steps:
having at least one compound T having a number f of thiol functional groups selected from 2, 3, 4 and 6;
adding to said compound T at least one compound E having a number g of epoxide functional groups selected from 2 and 3, in a quantity such that the ratio number of thiol groups: number of epoxy groups is from 3:1 to 4:1,
adding a catalyst before and/or after adding said compound E,
stirring the reaction mixture comprising compound(s) E and compound(s) T and the catalyst, and
recovering the obtained polythioether prepolymer.

13. A composition comprising at least one polythioether prepolymer according to anyone of claims 1 to 11 or prepared according to a preparation method according to claim 12 said polythioether prepolymer having a number of functional groups selected from 2, 3, 4, 5 and 6 and an oligomer chosen from modified (meth) acrylate oligomers and epoxy prepolymers, the sum of the functional group number of the polythioether prepolymer and the functional group number of the oligomer being greater than 4.

14. The composition according to claim 13, further comprising at least one filler chosen from organic fillers and inorganic fillers, preferably for its use a sealant or mastic.
